# EUROPEAN PATENT APPLICATION

(11) **EP 4 621 402 A1**
(43) Date of publication of application: **24.09.2025**
(21) Application number: 24164486.3
(22) Date of filing: 19.03.2024
(51) Int. Cl.: G01N 27/624, H01J 49/00

(54) **DIFFERENTIAL MOBILITY SPECTROMETER**

(71) Applicant: Bruker Switzerland AG, 8117 Fällanden (CH)
(72) Inventor: PAPANASTASIOU, Dimitris, CH-8117 Faellanden (CH); PARK, Mel, CH-8117 Faellanden (CH); REITER, Lukas, CH-8117 Faellanden (CH); RAETHER, Oliver, CH-8117 Faellanden (CH)
(74) Representative: Acapo AS

(57) **Abstract**

1. An apparatus comprising:
a series of mutually fluidically coupled vacuum chambers, including a first vacuum chamber and
a second vacuum chamber; and
a controller;
wherein the first vacuum chamber comprises: an ion inlet, for introduction of ions therethrough from an ion source; and a first ion guide, wherein the first ion guide is configured to guide the ions introduced through the ion inlet towards the second vacuum chamber, for example via a differential pressure aperture;
wherein the second vacuum chamber comprises: a differential mobility spectrometer, DMS; and
wherein the controller is communicatively coupled to the DMS;
characterized by:
wherein the controller is configured to control the DMS in a set of modes, wherein the set of modes includes:
a first mode, wherein the DMS is configured to separate the ions, for example using an asymmetric waveform and/or a ramped compensation voltage; and
a second mode, wherein the DMS is configured to separate the ions and to selectively attenuate respective fluxes of the separated ions according to respective abundances thereof, for example using an asymmetric waveform and/or a modulated compensation voltage.

## Description

### Field

The present invention relates to an apparatus for and a method of guiding ions using time-dependent electric fields in the presence of a gas. For example, relates to an apparatus for and a method of simultaneously controlling ion motion and the flow of gas in differential mobility spectrometers, such as coupled to ion trapping devices and/or mass spectrometers.

### Background to the invention

The fast motion of molecular ions in gases as compared to their motion in a condensed phase has established ion mobility as a powerful separation tool, especially in conjunction with mass spectrometry. Differential mobility spectrometry (DMS), also known as field asymmetric ion mobility spectrometry (FAIMS), serves as a post-ionization method for filtering ions in a controlled atmosphere, based on their respective mobilities or mobility coefficients. DMS thus provides a method of fractionating complex samples, suppressing chemical noise, separating isobaric mixtures and/or characterizing molecular ions. The terms DMS and FAIMS are used interchangeably.

In DMS, ions entrained in a gas stream are oscillated by alternating field polarities, provided typically by a high frequency, periodic, asymmetric voltage waveform that alternates between a high-field and a reversed low-field, applied perpendicularly to the direction of flow of the gas stream. Differences in mobility of the ions between the alternating field polarities result in a net displacement of the ions, urging ions to drift progressively off-axis and discharge on electrodes, for example. However, for ions having a specific mobility (or a range of mobilities), this displacement may be compensated by a DC voltage, termed the compensation voltage (CV). By scanning the CV at fixed amplitude and waveform frequency, the ions having the specific mobility (or the range of mobilities) are instead transported through the DMS and a spectrum is generated either by using an ion detector such as an electrometer, or by introducing the ions into a mass spectrometer providing additional mass-to-charge ratio information.

However, there remains a need to improve analysis of complex samples (for example, including co-eluting analytes) and/or improve a duty cycle of mass spectrometry.

### Summary of the Invention

A first aspect provides an apparatus comprising:
a series of mutually fluidically coupled vacuum chambers, including a first vacuum chamber and
a second vacuum chamber; and
a controller;
wherein the first vacuum chamber comprises: an ion inlet, for introduction of ions therethrough from an ion source; and a first ion guide, wherein the first ion guide is configured to guide the ions introduced through the ion inlet towards the second vacuum chamber, for example via a differential pressure aperture;
wherein the second vacuum chamber comprises: a differential mobility spectrometer, DMS; and
wherein the controller is communicatively coupled to the DMS;
characterized by:
   wherein the controller is configured to control the DMS in a set of modes, wherein the set of modes includes:
   a first mode, wherein the DMS is configured to separate the ions, for example using an asymmetric waveform and/or a ramped compensation voltage; and
   a second mode, wherein the DMS is configured to separate the ions and to selectively attenuate respective fluxes of the separated ions according to respective abundances thereof, for example using an asymmetric waveform and/or a modulated compensation voltage.

A second aspect provides an apparatus comprising:
a series of mutually fluidically coupled vacuum chambers, including a first vacuum chamber and a second vacuum chamber; and
a controller;
wherein the first vacuum chamber comprises: an ion inlet, for introduction of ions therethrough from an ion source; and a first ion guide, wherein the first ion guide is configured to guide the ions introduced through the ion inlet towards the second vacuum chamber, for example via a differential pressure aperture;
wherein the second vacuum chamber comprises: a differential mobility spectrometer, DMS; and
wherein the controller is communicatively coupled to the DMS;
characterized by:
   wherein the controller is configured to control the DMS in a set of modes, wherein the set of modes includes:
   a first mode, wherein the DMS is configured to separate the ions, for example using an asymmetric waveform and/or a ramped compensation voltage; and
   a fourth mode, wherein the DMS is configured to separate the ions and to selectively, for example preferentially, transmit the separated ions according to respective abundances thereof, for example using an asymmetric waveform and/or a modulated compensation voltage.

A third aspect provides an apparatus comprising:
a series of mutually fluidically coupled vacuum chambers, including a first vacuum chamber and a second vacuum chamber; and
a controller;
wherein the first vacuum chamber comprises: an ion inlet, for introduction of ions therethrough from an ion source; and a first ion guide, wherein the first ion guide is configured to guide the ions introduced through the ion inlet towards the second vacuum chamber, for example via a differential pressure aperture;
wherein the second vacuum chamber comprises: a differential mobility spectrometer, DMS; and
wherein the controller is communicatively coupled to the DMS;
characterized by:
   wherein the controller is configured to control the DMS in a set of modes, wherein the set of modes includes:
   a first mode, wherein the DMS is configured to separate the ions, for example using an asymmetric waveform and/or a ramped compensation voltage; and
   a fifth mode, wherein the DMS is configured to separate the ions and to selectively filter the separated ions by selectively parking the respective compensation voltages of the separated ions, for example for respective durations.

A fourth aspect provides an apparatus comprising:
a differential mobility spectrometer, DMS; and
a controller;
wherein the controller is communicatively coupled to the DMS;
characterized by:
   wherein the controller is configured to control the DMS in a set of modes, wherein the set of modes includes:
   a first mode, wherein the DMS is configured to separate the ions, for example using an asymmetric waveform and/or a ramped compensation voltage; and
   a second mode, wherein the DMS is configured to separate the ions and to selectively attenuate respective fluxes of the separated ions according to respective abundances thereof, for example using an asymmetric waveform and/or a modulated compensation voltage.

A fifth aspect provides an apparatus comprising:
a differential mobility spectrometer, DMS; and
a controller;
wherein the controller is communicatively coupled to the DMS;
characterized by:
   wherein the controller is configured to control the DMS in a set of modes, wherein the set of modes includes:
   a first mode, wherein the DMS is configured to separate the ions, for example using an asymmetric waveform and/or a ramped compensation voltage; and
   a fourth mode, wherein the DMS is configured to separate the ions and to selectively, for example preferentially, transmit the separated ions according to respective abundances thereof, for example using an asymmetric waveform and/or a modulated compensation voltage.

A sixth aspect provides an apparatus comprising:
a differential mobility spectrometer, DMS; and
a controller;
wherein the controller is communicatively coupled to the DMS;
characterized by:
   wherein the controller is configured to control the DMS in a set of modes, wherein the set of modes includes:
   a first mode, wherein the DMS is configured to separate the ions, for example using an asymmetric waveform and/or a ramped compensation voltage; and
   a fifth mode, wherein the DMS is configured to separate the ions and to selectively filter the separated ions by selectively parking the respective compensation voltages of the separated ions, for example for respective durations.

A seventh aspect provides a method of controlling a differential mobility spectrometer, DMS, the method implemented, at least in part by a computer comprising a processor and a memory, the method comprising:
controlling the DMS in a set of modes, wherein the set of modes includes:
a first mode, wherein the DMS separates the ions, for example using an asymmetric waveform and/or a ramped compensation voltage; and
a second mode, wherein the DMS separates the ions and selectively attenuates respective fluxes of the separated ions according to respective abundances thereof, for example using an asymmetric waveform and/or a modulated compensation voltage.

An eighth aspect provides a method of controlling a differential mobility spectrometer, DMS, the method implemented, at least in part by a computer comprising a processor and a memory, the method comprising:
controlling the DMS in a set of modes, wherein the set of modes includes:
a first mode, wherein the DMS separates the ions, for example using an asymmetric waveform and/or a ramped compensation voltage; and
a fourth mode, wherein the DMS separates the ions and selectively, for example preferentially, transmits the separated ions according to respective abundances thereof, for example using an asymmetric waveform and/or a modulated compensation voltage.

A ninth aspect provides a method of controlling a differential mobility spectrometer, DMS, the method implemented, at least in part by a computer comprising a processor and a memory, the method comprising:
controlling the DMS in a set of modes, wherein the set of modes includes:
a first mode, wherein the DMS separates the ions, for example using an asymmetric waveform and/or a ramped compensation voltage; and
a fifth mode, wherein the DMS separates the ions and selectively filters the separated ions by selectively parking the respective compensation voltages of the separated ions, for example for respective durations.

A tenth aspect provides: a computer comprising a processor and a memory configured to implement a method according to any of the seventh aspect, the eighth aspect and/or the ninth aspect; a computer program comprising instructions which, when executed by a computer comprising a processor and a memory, cause the computer to perform a method according to any of the seventh aspect, the eighth aspect and/or the ninth aspect: and/or a non-transient computer-readable storage medium comprising instructions which, when executed by a computer comprising a processor and a memory, cause the computer to perform a method according to any of the seventh aspect, the eighth aspect and/or the ninth aspect.

An eleventh aspect provides an apparatus comprising:
a series of mutually fluidically coupled vacuum chambers, including a first vacuum chamber and a second vacuum chamber;
wherein the first vacuum chamber comprises: an ion inlet, for introduction of ions therethrough from an ion source; and a first ion guide, wherein the first ion guide is configured to guide the ions introduced through the ion inlet towards the second vacuum chamber, for example via a differential pressure aperture; and
wherein the second vacuum chamber comprises: a differential mobility spectrometer, DMS.

### Detailed Description of the Invention

According to the present invention there is provided an apparatus, as set forth in the appended claims. Also provided is a method. Other features of the invention will be apparent from the dependent claims, and the description that follows.

### First aspect

The first aspect provides an apparatus comprising:
a series of mutually fluidically coupled vacuum chambers, including a first vacuum chamber and a second vacuum chamber; and
a controller;
wherein the first vacuum chamber comprises: an ion inlet, for introduction of ions therethrough from an ion source; and a first ion guide, wherein the first ion guide is configured to guide the ions introduced through the ion inlet towards the second vacuum chamber, for example via a differential pressure aperture;
wherein the second vacuum chamber comprises: a differential mobility spectrometer, DMS; and
wherein the controller is communicatively coupled to the DMS;
characterized by:
   wherein the controller is configured to control the DMS in a set of modes, wherein the set of modes includes:
   a first mode, wherein the DMS is configured to separate the ions, for example using an asymmetric waveform and/or a ramped compensation voltage, for example for determining respective abundances of the separated ions; and
   a second mode, wherein the DMS is configured to separate the ions and to selectively attenuate respective fluxes of the separated ions according to respective abundances thereof, for example using an asymmetric waveform and/or a modulated compensation voltage.

In this way, respective abundances of the separated ions may be determined using the first mode and subsequently, the respective fluxes of the separated ions may be selectively attenuated according to the determined respective abundances thereof, thereby relatively reducing transmission of the relatively higher abundance ions compared with the relatively lower abundance ions. In this way, space charge effects due to the relatively higher abundance ions may be avoided and/or eliminated, for example enabling quantitative analysis of complex samples. In one example, the DMS is configured, in the second mode, to ramp a CV relatively more quickly for relatively higher abundance ions than for relatively lower abundance ions. is In one example, the second mode comprises and/or is an attenuation mode for loading or filling a trapping device, preferably a trapped ion mobility spectrometer.

In one example, the respective abundances of the ions are determined from the respective fluxes (i.e. ion currents) and/or respective total charges (i.e. integrated ion currents) of the ions using the first mode.

The apparatus according to the first aspect, and corresponding methods of operation thereof, addresses the limitations in the art of analyzing complex samples, for example complex protein samples. The apparatus includes a DMS apparatus typically operated in a low pressure regime, for example provided in the second vacuum chamber, thereby enabling faster separations. By comprising the DMS in the second vacuum compartment of a mass spectrometer, upstream of a trapping device, a duty cycle and/or a dynamic range of the mass spectrometer may be enhanced, thus increasing the depth of analysis of complex samples.

### Apparatus

The apparatus comprises the series of mutually fluidically coupled vacuum chambers, including the first vacuum chamber and the second vacuum chamber.

The first vacuum chamber comprises: the ion inlet, for introduction of ions therethrough from the ion source; and the first ion guide, wherein the first ion guide is configured to guide the ions introduced through the ion inlet towards the second vacuum chamber, for example via a differential pressure aperture.

In one example, ions are produced by the ion source, for example by electrospray ionization (ESI), at near-ambient pressure and transferred through a heated inlet into the first vacuum chamber, for example maintained at a pressure in range from 1 to 50 mbar, preferably in a range from 5 to 20 mbar, for example using a mechanical pump.

In one example, the ion inlet comprises and/or is a heated inlet, for example to promote desolvation of clusters and/or adduct-ions produced in the ESI source and/or to improve cleanliness of the ion inlet.

In one example, the first ion guide comprises and/or is an ion funnel or other type of RF-confining transfer optics, configured to guide and to focus the ions introduced through the ion inlet towards the second vacuum chamber, for example via a differential pressure aperture focus.

In one example, the ion inlet and the first ion guide are disposed mutually transversely (i.e. off axis). In this way, cleanliness of the first ion guide is improved. In one example, the first vacuum chamber comprises an electrode configured to bias (for example deflect or attract) the ions introduced through the ion inlet towards the first ion guide. In one example, the first vacuum chamber comprises a pumping port positioned facing the ion inlet. In one example, the first ion guide and the DMS are mutually disposed axially. In this way, ion transmission from the first ion guide to the DMS is improved while a shape and/or a laminar flow of gas into the DMS improved. Commercially available DMS systems operate at near-atmospheric pressure and receive ions directly from the electrospray ionization (ESI) source, leading to rapid contamination of the electrode surfaces and reducing instrument robustness. The same applies to a DMS apparatus operated in the low-pressure regime inside the first vacuum compartment of a mass spectrometer configured in-line with the free jet gas enriched with charged cluster-ions and neutral contaminants, as described in US8610054B2. To reduce electrode surface contamination and improve instrument robustness, it is beneficial to operate a DMS apparatus outside the line-of-sight of the beam-spray produced in an ESI source and the ensuing plume of charged cluster ions and neutral contaminants expanding freely in the first vacuum compartment of a mass spectrometer. Hence, according to the first aspect, the DMS is comprised in the second vacuum chamber.

The second vacuum chamber comprises the DMS. In this way, electrode surface contamination is reduced and/or instrument robustness is improved, since the DMS is outside the line-of-sight of the beam-spray produced in an ESI source and the ensuing plume of charged cluster ions and neutral contaminants expanding freely in the first vacuum chamber.

In one example, the second vacuum chamber is arranged to provide a laminar low pressure gas flow for transporting the ions using the DMS. In this way, separation of the ions by the DMS is improved, for example a resolution and/or reproducibility of the separation of the ions is improved.

In one example, the second vacuum chamber comprises a RF ion guide configured to confine (for example radially confine) the ions and optionally, to shape and/or laminarize the low-pressure gas flow, for example towards and/or into the DMS. In one example, the RF ion guide is coaxially coupled with the low pressure DMS configured to sustain the laminar flow throughout the length of the separation channel where the asymmetric waveform and the CV signals are applied for transferring, filtering and/or fractionating complex mixtures of ions.

In one example, the second vacuum chamber comprises a set of vacuum sub-chambers, including a first vacuum sub-chamber (also known as a vacuum compartment) and a vacuum second sub-chamber;
wherein the DMS is disposed at least in part in the second vacuum sub-chamber;
optionally, wherein the first sub-chamber comprises a second ion guide configured to guide the ions from the first vacuum chamber into the DMS.

In one example, the second ion guide comprises and/or is a laminar flow device.

In one example, the apparatus comprises a vacuum pump configured to pump the second vacuum sub-chamber. In one example, the apparatus does not comprise a vacuum pump configured to pump the first vacuum sub-chamber. In one example, the first vacuum sub-chamber is not pumped and the second vacuum sub-chamber is pumped. In this way, a shape and/or a laminar flow of gas into the DMS is improved.

In one example, the apparatus comprises an adjustable valve for controlling the laminarized gas flow through the DMS.

In other words, in one example, the second vacuum chamber includes a first vacuum compartment and a second vacuum compartment, for example whereby pumping is applied only to the second compartment. Alternatively, the second vacuum region is pumped through a differential aperture downstream of the DMS apparatus. Preferably, a pressure in the RF ion guide and/or the DMS is maintained in a low pressure regime in a range from 1 to 50 mbar, preferably in a range from 5 to 20 mbar. Typically, the duty cycle in LC-MS workflows is limited by the transit time of ions through the DMS, which is typically ~25 ms. Operation in the low pressure regime can enhance the duty cycle since the velocity of the carrier gas is considerably higher (>100 m/s) and the transit time can be reduced to 1 ms or less if the length of the DMS separation channel is 100 mm.

In one example, the second vacuum sub-chamber comprises an additional ion guide disposed downstream of the DMS, configured to guide the ions therefrom.

In one example, the apparatus comprises a system of electrodes disposed at the exit of the DMS with at least one electrode selectively switchable between a first level for transmitting ions and a second level for collecting the DMS output ion current, for example measured using an electrometer, for generating DMS spectra.

In one example, ions are focused through a first differential aperture into the second vacuum chamber accommodating an additional transfer RF ion guide, for example an ion funnel, operable in the pressure range of <1 mbar. A DC field gradient is provided by either segmenting the transfer RF ion guide and providing different DC components to each segment, or by using additional electrodes providing a DC-only component superimposed to the RF field and forming an axial DC gradient to transfer ions across the device. The axial DC field of the additional transfer RF ion guide can be further configured to provide axial trapping and ejection of ions to downstream optics. Ions can be accelerated at the entrance of the transfer RF ion guide to kinetic energies sufficiently high to promote desolvation of clusters and/or adduct-ions produced in the ESI source and without fragmentation. In one example, a third vacuum region is provided and operated at a higher pressure of >1 mbar to enable processing of ions using DMS. The third vacuum region may be configured to accommodate an RF ion guide for shaping the gas, coaxially coupled with a low pressure DMS configured to sustain a laminar flow in the separation channel. In one example, the third vacuum region is designed with a first and a second vacuum compartment whereby pumping is applied only to the second compartment, while pressure is maintained in the range of 1 to 50 mbar, most preferably in the pressure range of 5 to 20 mbar. An enlarged differential aperture downstream of the DMS used for transporting ions into the fourth vacuum region can be used as an alternative means for pumping the third vacuum region and for directing the gas at low pressure while sustaining laminar flow conditions in the DMS channel. The second differential aperture is configured to enhance ion transfer efficiency by minimizing losses due to scattering of the ions by the opposing gas flow. The elevated pressure in the third vacuum region is preferably established by a second inlet arranged coaxially with the RF ion guide and the DMS to provide the necessary gas flow means for processing ions in the DMS. Similarly, at least one electrode disposed downstream of the DMS is selectively switched between a first level for transmitting ions and a second level for collecting the DMS output ion current and generating DMS spectra. Ions transferred through the DMS can be introduced into a trapping device. Preferably, the trapping device is a trapped ion mobility spectrometer coupled to a pre-trapping region to enable parallel accumulation of ions. Ions processed in the DMS and in the trapped ion mobility device are subsequently subjected to the steps of mass selection, fragmentation, and detection, typically performed with LC-MS instrumentation enabling advanced DDA and DIA analytical workflows.

Different methods have been developed to address duty cycle limitations and increase the depth of the analysis in LC-MS of complex protein samples. One example is the parallel accumulation approach developed for the trapped ion mobility analyzer [US9683964B2]. Ions produced continuously in an ESI source are accumulated in a pre-trapping region over a predetermined period. The accumulated population is subsequently transferred to the trapped ion mobility analyzer, ions are separated according to their low-field mobilities and progressively released to downstream optics for mass selection, fragmentation and detection. The correlation between ion mobility and the mass-to-charge ratio allows scanning the isolation window of the quadrupole mass filter concurrently with the elution period of the peptide ions from the trapped ion mobility analyzer, utilizing a significantly higher fraction of the incoming ion beam. Further enhancements in the duty cycle of the experiment can be accomplished by matching the accumulation period in the pre-trapping region to the separation and elution (analysis) time of the ions in the trapped ion mobility analyzer.

In one example, the set of vacuum chambers includes a third chamber; and the third vacuum chamber comprises: a third ion inlet, for entrance of the ions therethrough from the second vacuum chamber; a third ion outlet; and a trapping device, wherein the trapping device is configured to trap the ions.

In one example, the trapping device comprises and/or is a trapped ion mobility spectrometer.

In this way, ions transferred through the DMS may be focused using an ion funnel or other type of RF-confining ion optics for example through a differential aperture into a third vacuum chamber comprising the trapping device. Preferably, the trapping device is a trapped ion mobility spectrometer, for example comprising a pre-trapping region to enable parallel accumulation of ions. Ions processed in the DMS and in the trapping device may be subsequently subjected to one or more steps of mass selection, fragmentation and detection, typically performed with LC-MS instrumentation enabling advanced DDA and DIA analytical workflows.

In one example, the DMS and the trapping device, preferably a trapped ion mobility spectrometer, are coaxial i.e. disposed to share a common ion optical axis. For example, gas flow from the first vacuum chamber, preferably maintained in the pressure range of 5 to 20 mbar, enters the second vacuum chamber through a differential aperture and is further shaped and laminarized by an RF ion guide disposed upstream of the DMS. The DMS is also in fluid communication with the trapping device, while the laminarized gas flow maintained throughout the DMS separation channel is introduced non-disruptively into the trapped ion mobility spectrometer. In one example, the RF ion guide used for gas flow laminarization, the DMS and the trapping device, preferably a trapped ion mobility spectrometer, are coaxial i.e. all share a common ion optical axis. Various pumping schemes can be applied for controlling the laminarized gas flow and the pressure gradient from the DMS apparatus to the trapped ion mobility spectrometer. These pumping schemes include exhaust ports to evacuate gas without affecting the laminar character of the low pressure gas flow in the DMS apparatus and the analyzer part of the trapped ion mobility spectrometer.

In one example, the trapped ion mobility spectrometer comprises a pre-trapping region and an analyzer part, for parallel accumulation. In one example, the accumulation period in the pre-trapping region and the mobility analysis time are set equal to maximize the duty cycle of the trapped ion mobility spectrometer. In one example, the modulated DMS scan time is set equal to the trapped ion mobility scan time to improve the duty cycle of the method further. In one example, the number of sequential modulated DMS scans before a subsequent DMS survey scan is applied is matched to the number of trapped ion mobility MS2 scans corresponding to a single trapped ion mobility - MS survey scan. This approach allows for scanning the entire two-dimensional map of mass-to-charge vs ion mobility corresponding to a single MS survey scan using all the different DIA methods with parallel accumulation and combining these with modulated DMS scans to load the trapped ion mobility device. Trapped ion mobility - MS survey scans are performed with the DMS operated in transmission mode. This mode of operation may require applying a symmetric RF waveform to the DMS electrodes and can be utilized further for quantifying precursor ions since the ion beam is no longer modulated. Symmetric and asymmetric RF waveform can be produced by controlling the duty cycle of the waveform. In one example, the waveforms applied in the low pressure DMS apparatus are rectangular waves with fast rising and falling edges and with flat tops.

In one example, the apparatus comprises and/or is a mass spectrometer, for example comprising a time-of-flight (TOF) mass spectrometer (MS) such as an orthogonal acceleration (OA) TOF MS or an electrostatic trap MS such as an orbitrap MS, disposed downstream of the DMS and optionally, comprising a trapping device disposed between the DMS and the MS, such as the TOF MS or the electrostatic trap MS.

### Modes

The controller is configured to control the DMS in the set of modes, wherein the set of modes includes:
the first mode, wherein the DMS is configured to separate the ions, for example using an asymmetric waveform and/or a ramped compensation voltage; and
the second mode, wherein the DMS is configured to separate the ions and to selectively attenuate respective fluxes of the separated ions according to respective abundances thereof, for example using an asymmetric waveform and/or a modulated compensation voltage.

### First mode

It should be understood that the first mode comprises and/or is a survey mode (also known as a survey scan or a DMS survey scan), whereby a DMS spectrum of the separated ions, for example all the separated ions or for a subset thereof, may be obtained. In this way, bright (relatively high intensity) regions in the DMS spectrum, corresponding to CV values where the ion abundance is sufficiently high to induce space-charge driven suppression effects, may be determined.

In one example, the controller is configured to control the DMS in the first mode to separate the ions using the asymmetric waveform and the ramped compensation voltage.

In one example, the controller is configured to control the DMS in the first mode to ramp, for example linearly, a compensation voltage, for example as a function of time and/or as a function of mobility.

In one example, the controller is configured to control the DMS in the first mode to perform the first of a series of DMS survey scans during an LC gradient to generate a first of a corresponding series of DMS spectra. In one example, the first DMS spectrum is generated by performing a linear scan of the CV using fixed voltage steps applied at regular time intervals and recording the ion current in each step. In one example, the intensity of the ion current is recorded using an electrometer (DMS scan) or a mass analyzer containing mass-to-charge information (DMS-MS scan). Mass-to-charge information can be used for quantifying the analytes or precursor ions present in a sample. The scan range of the CV ramp or the CV signal in the first DMS survey scan can be wide enough to include all precursor ions produced in the ESI source, for example, or extend over a narrower range, for example, to exclude the majority of the singly charged ions, which are typically separated on the CV axis from the higher charge-state peptide ions in order to increase the speed of the analysis and also the duty cycle of the instrument for the higher charge states analytes. DMS survey scans are used to identify the bright regions in the DMS spectrum corresponding to CV values where the ion abundance is sufficiently high to induce space-charge driven suppression effects, for example in a downstream trapping device.

In one example, the DMS is configured to perform a DMS survey scan by ramping the CV to generate a DMS spectrum. The spectrum may be generated by applying a linear CV ramp using fixed voltage steps applied at regular time intervals and recording the ion current in each step. The intensity of the ion current may be recorded using an electrometer or a mass analyzer containing mass-to-charge information. The voltage range of the CV ramp in a DMS survey scan may be wide enough to include all precursor ions produced in the ESI source or extend over a narrower range of values. DMS survey scans may be used to identify the high intensity regions in the DMS spectrum. In these high intensity regions that may correspond to one or more CV ranges, the ion intensity is sufficiently high to induce space-charge driven suppression effects in the trapping device disposed downstream of the DMS. The intensity of relatively higher abundance ions may be orders of magnitude greater than the intensity of relatively lower abundance ions 405, which are visible closer to the baseline of the DMS spectrum 402. In one example, a duration of a single CV ramp for performing a DMS survey scan is in a range from 10 ms to 500 ms, preferably in a range from 50 ms to 100 ms.

### Second mode

It should be understood that the second mode comprises and/or is an attenuation mode, whereby the respective fluxes of the separated ions are selectively attenuated proportionately according to the respective abundances of the separated ions, for example as determined from the first DMS spectrum such as for the same sample (i.e. the first DMS spectrum is generated within a scan, between successive scans, within a cycle and/or between successive cycles) and/or for a previous sample (i.e. a stored first DMS spectrum), as described previously. In this way, the respective fluxes of the separated ions having respective abundances sufficiently high to induce space-charge driven suppression effects may be selectively attenuated, thereby reducing space-charge driven suppression effects otherwise caused thereby. In this way, relatively lower abundance separated ions may be analysed, for example, with reduced space-charge driven suppression effects due to the relatively higher abundance separated ions since the respective ion fluxes of these relatively higher abundance separated ions are attenuated.

Generally, trapping devices have a finite space charge capacity. Space charge can lead to mass and/or mobility discrimination or suppression effects, especially when analyzing complex samples with an extended dynamic range in protein concentration where low and high abundance species are simultaneously trapped for prolonged periods of time. It is therefore highly desirable to control the abundance of the different ions across the mass and mobility range of the ions injected and co-trapped in a trapping device to minimize such undesirable effects, as described with respect to the second mode.

In one example, the controller is configured to control the DMS in the second mode to separate the ions and to selectively attenuate the respective fluxes of the separated ions of the separated ions according to respective abundances thereof, using the modulated compensation voltage.

In one example, the controller is configured to control the DMS in the second mode to selectively attenuate the respective fluxes of the separated ions proportionately, for example linearly, according to the respective abundances of the separated ions. In this way, separated ions having relatively higher abundances are attenuated proportionately (i.e. in proportion to the respective fluxes) more than separated ions having relatively lower abundances.

In one example, the apparatus comprises a detector, configured to detect the respective fluxes of the separated ions. In one example, the detector comprises and/or is an electrometer, for example downstream of the DMS such as directly downstream of the DMS, to measure current and/or preferably a MS detector.

In one example, the controller is configured to control the DMS in the second mode to selectively attenuate the respective fluxes of the separated ions responsive to detected respective fluxes of the separated ions in the first mode, for example as determined from a DMS survey scan.

In one example, the controller is configured to control the DMS in the second mode to selectively attenuate the respective fluxes of the separated ions by controlling (or modulating) a compensation voltage of the DMS, for example as described below in more detail.

In one example, the controller is configured to control the DMS in the second mode to selectively attenuate the respective fluxes of the separated ions by controlling respective compensation voltages, for example amplitudes and/or durations thereof, of the separated ions, for example as described below in more detail.

In one example, the controller is configured to control the DMS in the second mode to selectively attenuate the respective fluxes of the separated ions by:
selectively modulating, for example amplitude modulating, the respective compensation voltages of the separated ions, for example as described below in more detail.

In one example, the controller is configured to control the DMS in the second mode to selectively attenuate the respective fluxes of the separated ions by:
selectively ramping, for example at respective ramp rates, respective compensation voltages of the separated ions, for example as described below in more detail.

In one example, the second mode comprises and/or is a modulated DMS scan, for example performed subsequently to the DMS survey scan described previously, where the CV signal comprises a series of voltage steps applied at regular time intervals, while the voltage step is no longer fixed but is varied across the CV scan range based on respective ion abundances. In one example, the second mode comprises using DMS survey scan information in real-time to calculate and apply a modulated DMS scan whereby the CV is stepped faster across the relatively bright regions of the DMS survey scan, thus reducing the space charge load originating from these relatively bright regions and transferred downstream, for example to a trapping device, in order to minimize suppression effects thereof. In one example, the ions transmitted by the modulated DMS scan of the second mode are stored and processed in a trapping device (as described further below), for example comprising processing steps including storage, separation and/or activation to promote desolvation, and optionally further subjected to mass selection, fragmentation and detection, such as typically performed with LC-MS instrumentation enabling DDA and DIA analytical workflows. In one example, a series of sequential modulated DMS scans is performed following a single DMS survey scan, jointly forming a processing cycle. These processing cycles may be applied sequentially throughout an LC gradient, for example. Different processing cycles may be applied during the LC gradient, where the parameters of the CV ramp applied in modulated scans are adjusted based on information provided by DMS survey scans.

In one example, a DMS survey scan (i.e. first mode) is performed to define a set of CV levels for generating at least one subsequent CV scan whereby the CV levels are stepped across the CV range of interest. In one example, the CV levels are evenly spaced across the CV range of interest, while the duration of every step is determined by the ion intensity measured in the DMS survey scan for the corresponding CV levels. As a result, the number of charges transferred to downstream, for example to a trapping device, preferably to a trapped ion mobility spectrometer, is controlled with high precision by varying the period of each of the CV levels applied in a stepped CV scan. This method mitigates or eliminates ion suppression and any other undesired effects associated with excessive space charge stored in a trapping device. The optimum number of charges or the charge load can therefore be transferred to a trapping device. Unevenly spaced CV levels can also be selected for performing a stepped CV scan based on DMS survey scan information. Ion processing in a single cycle therefore may include performing either a DMS survey scan or a DMS-MS survey scan for further quantifying precursor ions, and without trapping or storing ions in the trapped ion mobility spectrometer, followed by one or more stepped CV scans to transfer the desired precursor ion population to the trapping device while eliminating ion suppression effects by matching the space charge capacity across the ion mobility range of the ions stored therein. Additionally, ions separated in the trapping device can be further subjected to mass selection, fragmentation and ultimately detection by TOF, steps which are typically performed with LC-MS instrumentation enabling DDA and DIA analytical workflows.

In one example, the trapping device is a mobility trapping device, preferably a trapped ion mobility analyzer including a pre-trapping region for parallel accumulation and serial fragmentation. In one example, the accumulation period in the pre-trapping region and the mobility analysis time are set equal to maximize the duty cycle of the trapped ion mobility spectrometer. A modulated or a stepped DMS scan with the same duration can be generated and applied to match the parallel accumulation cycle. The modulated population of ions delivered to the trapped ion mobility device will exhibit a more uniform space charge load across the mobility range stored in the device, therefore suppression effects due to the presence of high abundance precursor ions are either reduced or eliminated. Subsequently, the modulated population stored in the trapped ion mobility device is ultimately subjected to mass selection, fragmentation and mass-to-charge detection. Most preferably, the number of sequential modulated or stepped DMS scans is matched to the number of trapped ion mobility MS2 scans required to cover the entire range, or a selected area of the two-dimensional map of ion mobility and mass-to-charge generated in a trapped ion mobility - MS2 survey scan. Trapped ion mobility - MS survey scans are typically performed in DIA workflows with parallel accumulation to record precursor mass-to-charge and ion mobility information and for quantitation purposes. Modulated or stepped DMS scans can also be combined with trapped ion mobility - MS survey scans where suppression effects in a trapping device are eliminated and all precursor ions are measured across the mass-to-charge and ion mobility range of interest.

In one example, the controller is configured to control the DMS in the second mode to selectively attenuate the respective fluxes of the separated ions by:
selectively stepping, for example with respective steps and/or durations, the respective compensation voltages of the separated ions, for example as described below in more detail.

In one example, a stepped CV approach is adopted, for performing the modulated CV scans whereby the CV ramp comprises two or more CV values or CV levels selected to transfer fractions of the ion population separated in the DMS into the trapping device. The CV values applied during the modulated DMS scans in this mode of operation are chosen outside of the bright regions in the DMS spectrum to minimize injecting the highly abundant species to the trapped ion mobility spectrometer, thus eliminating suppression effects thereof. The suppression effects can be resolved using this method since DMS and trapped ion mobility are orthogonal separation methods thus the likelihood of low and high abundance ions exhibiting the same low-field mobilities and simultaneously the same mobility coefficients defining their differential mobility properties is rather low. The likelihood of detecting peptides with comparable low-field mobilities exhibiting a high dynamic range in concentration is therefore much higher if the DMS is used for fractionating the ion population delivered to the trapped ion mobility spectrometer.

In one example, the controller is configured to control the DMS in the second mode to selectively attenuate the respective fluxes of the separated ions by controlling a duty cycle of the asymmetric waveform.

In one example, the controller is configured to control the DMS in the second mode to selectively attenuate the respective fluxes of the separated ions to at most a predetermined threshold flux.

In one example, the controller is configured to control the DMS in the second mode to selectively attenuate the respective fluxes of the separated ions to normalize (across the mobility range) the total flux, for example within a predetermined flux range. In this way, respective fluxes of relatively higher abundance ions are selectively attenuated compared with respective fluxes of relatively lower abundance ions, for example wherein the modulated compensation voltage comprises a relatively higher CV ramp rate for the relatively higher abundance ions and a relatively lower CV ramp rate for the relatively lower abundance ions. In one example, the predetermined flux range is determined using the first mode.

In one example, the controller is configured to control the DMS in the second mode to transmit a predetermined total charge, for example within a predetermined total charge range such as a charge limit of a trapping device downstream of the DMS. In this way, such a trapping device may be filled, rather than overfilled or underfilled, thereby mitigating space charge effects in the trapping device (c.f. overfilled) while improving a duty cycle of the apparatus (c.f. underfilled). In one example, a product of a length of a CV ramp (time) and an ion current measured at the end of a scan, for example a DMS survey scan and/or DMS attenuation scan, corresponds with a total number of ions transported to the trapping device at end of each scan, for example a DMS survey scan and/or DMS attenuation scan. For example, the TIC may be measured for a DMS survey scan and then parameters for the DMS attenuation scan may be adjusted to limit the TIC to charge limit of trapping device. For example, the TIC may be measured for a DMS attenuation scan and then parameters for a subsequent DMS attenuation scan may be re-adjusted (for example, refined) to limit the TIC to charge limit of trapping device.

In one example, the controller is configured to control the DMS in the second mode to ramp a CV to follow a shape of a DMS spectrum, for example obtained using the first mode, whereby the ion current, due to separated ions transmitted through the DMS, is relatively constant or constant as a function of CV. In this way, the respective fluxes of the separated ions, transmitted through the DMS, are normalized.

In one example, the controller is configured to control the DMS in the first mode and subsequently, in the second mode. For example, a DMS survey scan may be followed by one or multiple/sequential modulated DMS scans. A DMS spectrum corresponding to a modulated DMS scan reflects the ion population that will be transferred, for example, to a trapping device, such as a to a trapped ion mobility spectrometer, whereby the intensities of the most abundant ions are reduced by modulating the CV ramp. In one example, in modulated DMS scans, the CV ramp or CV signal comprises a series of voltage steps applied at regular or fixed time intervals, while the voltage step and/or the number of steps are no longer fixed as in ramp but instead these parameters are varied across the different CV scan ranges based on the ion abundance information generated in the preceding DMS survey scan. In one example, the DMS survey scan is processed in real-time and the CV values corresponding to high intensity regions are used to define one or more range of values in the modulated CV ramp where the CV range is stepped, scanned or ramped faster, to reduce the transmission of the high abundance ions through the apparatus. In one example, a modulated CV scan comprises a non-linear CV ramp with features based on DMS survey scan information processed in real-time. In one example, in the modulated DMS scan, the slope of the ramp corresponding to low intensity ions is fixed and differs from the slope of the CV ramp applied to generate a DMS survey scan. This allows for reducing the space charge load originating from the high intensity regions observed in the DMS survey scan and transferred to the trapped ion mobility spectrometer to minimize suppression effects. The ions transmitted by a modulated DMS scan may be stored and separated according to their low-field ion mobilities in a trapping device, such as a trapped ion mobility spectrometer, and can be further subjected to the steps of mass selection, fragmentation and detection typically performed with LC-MS instrumentation supporting DDA and DIA analytical workflows.

In one example, sequential modulated DMS scans are performed following a DMS survey scan, jointly forming a processing cycle. These processing cycles may be applied sequentially during the LC gradient of an LC-MS experiment. The duration of each of the processing cycles may be varied during the LC gradient, for example, by including a greater number of modulated DMS scans. Alternatively, or jointly, a speed of the modulated CV ramp may also be controlled to adjust the number of ions delivered to the trapped ion mobility spectrometer. In one example, a speed of the modulated CV ramp and the different slopes of the CV applied are determined by the maximum space charge capacity of the trapping device and this can be determined in real-time by monitoring variations of the ion current produced in the ESI source.

In one example, a DMS survey scan is performed and a set of CV levels is defined and applied in at least one subsequent stepped CV scan based on ion intensity information across the CV range of interest. In one example, the CV levels in the one or more stepped CV scans are evenly spaced across the CV range of interest, while the duration of every step is determined by the ion intensity measured in the DMS scan for the corresponding CV levels. In one example, corresponding CV levels for relatively lower intensity regions of the DMS survey scan are applied for a relatively longer period. In one example, corresponding CV levels for relatively higher intensity regions of the DMS survey scan are applied for a relatively shorter period. As a result, the number of charges transferred to a trapping device, preferably to a trapped ion mobility spectrometer, is controlled with high precision by varying the period of each of the CV levels applied in a stepped CV scan. This method eliminates ion suppression and any other undesired effects associated with excessive space charge stored in a trapping device. Furthermore, the speed at which a single stepped CV scan is applied may be calculated by the space charge capacity of the trapped ion mobility spectrometer and the integral of ion current measured in a preceding DMS survey scan. The optimum number of charges or charge load can therefore be transferred to a trapping device in every stepped CV scan during the LC gradient of an LC-MS experiment. Unevenly spaced CV levels may also be selected for performing a stepped CV scan.

In one example, a single cycle include a first DMS or DMS-MS survey scan, followed by one or multiple stepped CV scans to transfer ions in a trapped ion mobility device, matching the space charge capacity of the trapping device, and further including the mobility separation of the transferred ion population using the trapped ion mobility analyzer. In one example, a stepped CV scan is performed for every trapped ion mobility scan, while multiple trapped ion mobility scans are generally performed to cover the entire ion mobility and mass-to-charge range of the ions separated in the trapped ion mobility analyzer. DMS-MS survey scans where the trapped ion mobility device is operated in transmission or pass-through mode may be used for quantifying precursor ions and, preferably, a single DMS-MS scan is performed within a cycle. Alternatively, MS-only scans can be used instead.

In one example, ion processing in a single cycle includes the steps of performing either a DMS survey scan or a DMS-MS survey scan for further quantifying precursor ions, and without trapping or storing ions in the trapped ion mobility spectrometer, followed by one or more stepped CV scans to transfer the desired precursor ion population to the trapped ion mobility device while eliminating ion suppression effects by matching the space charge capacity across the ion mobility range of the ions stored therein. In one example, cycles are applied sequentially and/or overlap during the LC gradient of an LC-MS experiment. Overlapping may include performing a stepped CV scan for transferring ions into the pre-trapping / storage region of the trapped ion mobility analyzer whilst separating ions received from a previous stepped CV scan in the analyzer part of the trapped ion mobility spectrometer. In one example, in every cycle, the stepping CV process is optimized by using information provided by the DMS or DMS-MS survey scans. In one example, ions separated in the trapped ion mobility spectrometer are further subjected to mass selection, fragmentation and detection by TOF, steps which are typically performed with LC-MS instrumentation enabling DDA and DIA analytical workflows.

In one example, the controller is configured to control the DMS in the second mode to step the CV, for example instead of a non-linear CV ramp. In one example, the CV step values applied during the modulated DMS scans are chosen outside of the high intensity regions determined by preceding DMS survey scans. For example, the CV may be stepped through one or more relatively high intensity regions, to select relatively lower intensity regions from the ion population and reduce suppression effects observed when storing the highly abundant ions in the trapping device, such as a trapped ion mobility spectrometer.

The success of this method relies on the fact that DMS and ion mobility devices operated in the low-field regime such as the trapped ion mobility spectrometer are orthogonal separation methods. For example, the DMS will separate the low abundance peptides from the high abundance peptides exhibiting comparable low-field ion mobilities measured in the trapped ion mobility analyzer. These low abundance species would be lost due to suppression effects if the trapped ion mobility was operated autonomously receiving all ions from the ESI source and without the filtering action of the DMS. The likelihood of detecting peptides with comparable low-field mobilities exhibiting a high dynamic range in concentration is therefore much higher if the DMS is fractionating the ion population delivered to the trapped ion mobility spectrometer.

In one example, different CV levels, and optionally different number of CV levels when applying one or more modulated DMS scans sequentially, are selected based on real-time information generated by a DMS survey scan preceding the modulated DMS scans. These CV levels and the total number of these levels used for generating a modulated CV scan may be optimized to selectively transfer fractions of ions from the complex sample to the trapped ion mobility spectrometer, increasing the depth of the analysis. In one example, the modulated DMS scans transmitting low abundance ions to the trapped ion mobility spectrometer are combined or interleaved with one or more trapped ion mobility spectrometer scans, where the DMS is operated in transmission-only mode where no selection or filtering of ions is applied.

In one example, the DMS is operated in transmission mode and all ions produced in the ESI source are transferred to the trapped ion mobility device. This allows for detecting with higher efficiency the low abundance ions overlapping with the highest abundance ions in the DMS spectrum, since the orthogonality of the two mobility separation methods will increase the likelihood that these two different ions are separated in a trapped ion mobility spectrometer, for example. The ions processed in the trapped ion mobility spectrometer may be measured directly by a TOF MS to generate a two-dimensional map containing trapped ion mobility and MS survey scan information, where survey scans in general are used for quantitation of the different ions. Additionally, ions processed in the trapped ion mobility spectrometer may be further subjected to mass selection, fragmentation and ultimately detection by TOF, steps which are typically performed with LC-MS instrumentation in DDA and DIA analytical workflows.

In one example, selected CV levels for generating a stepped CV scan coincide with one or more local maxima present in a DMS spectrum, in which case these fractions may be directly transferred to the mass analyzer, preferably a TOF MS, without being separated in a trapped ion mobility analyzer. A DMS-MS survey scan is preferably performed first, at the onset of a scan cycle, by stepping the CV through a predetermined number of voltage levels, followed by a series of DMS-MS2 scans stepping through the same voltage levels where fragment ions are generated and detected in the TOF mass analyzer.

In one example, a cycle is repeated multiple times during an experiment using the same CV levels or circulating between different CV levels during the LC gradient. The ions filtered by the DMS using the stepped CV level approach may either be directly fragmented in a collision cell or stored and separated in a trapped ion mobility device prior to fragmentation.

In one example, the CV levels are fixed throughout the duration of an LC gradient. In one example, the CV levels are adjusted based on real-time information generated by fast DMS or DMS-MS survey scans. Variable dwell times on each CV level depending on DMS or DMS-MS survey scan information may also be applied to optimize the number of ions transferred downstream to a trapping device, for example, to the trapping ion mobility spectrometer to match the space charge capacity and eliminate suppression effects. Modes were singly charged ions are also selectively transferred through the DMS to the trapping device are also envisaged. The DMS survey scans may also include mass-to-charge ratio information generated by the TOF mass analyzer.

In one example, a single CV level is chosen for selectively transferring ions to a trapping device such as a trapped ion mobility analyzer. In this way, the trapping device is loaded with a fraction of ions only, corresponding to a single CV level that remains fixed through the LC gradient, and this allows to measure this fraction with a higher duty cycle covering a wider dynamic range in terms of ion concentration. Additionally, more concentrated samples can be loaded onto a chromatographic column and analyzed. Furthermore, the accumulation or injection time of ions can be chosen such that, according to the CV selected, a suitable number of ions is transferred according to the ion capacity of the trapping device. After the trapping device, the ions can be further subjected to mass selection, fragmentation and detection typically performed with LC-MS instrumentation enabling DDA and DIA analytical workflows. The CV level in a single CV experiment can be chosen such that for a typical bottom-up proteomics experiment a suitable population of peptides is selected by the DMS apparatus. The CV level can be optimized for various outcomes such as quantification of a maximum number of proteins or peptides and also for specific applications such as phosphoproteomics, immunopeptidomics or glycoproteomics.

In one example, the single CV level is extended by analyzing the same sample multiple times using the same LC gradient, but with different CV values applied in each LC gradient to cover a CV range of interest. Optimum CV levels can therefore be identified where the number of peptide and protein identifications is the highest, while based on this information, a single new experiment can be designed and performed where the CV is cycled over a predetermined set of optimum CV levels produced using the single CV level approach. While cycling through different CV levels in a single experiment will increase the cycle time of the method, the depth of the analysis will also increase leading to an increased number of peptide and protein identifications. Experiments where the CV is cycled between 1 and 20 CV levels are envisioned, more preferably between 2 to 10 CV levels, and most preferably between 3 to 5 CV levels. The fraction of ions selected by the DMS can either be transferred in the trapped ion mobility analyzer providing another dimension of separation based on low field mobilities prior to mass selection, fragmentation and detection, or directly subjected to mass selection, fragmentation and detection typically performed with LC-MS instrumentation enabling DDA and DIA analytical workflows. The method can be optimized for various outcomes such as quantification of a maximal number of proteins or peptides and also for specific applications such as phosphoproteomics, immunopeptidomics or glycoproteomics. Optimum sets of CV levels values can be extended to samples belonging to a specific class of molecules, without the need to repeat all the single CV level experiments. The accumulation or injection times in the trapped ion mobility spectrometer can be fixed during the LC gradient or varied between the different CV levels to control the charge load since the ion flux at different CV levels may differ considerably.

In one example, one or more of the methods described above are interleaved within a cycle or combined in a consecutive manner. A series of cycles can be applied sequentially during a LC gradient tailoring these methods in every cycle independently based on DMS survey scan information, DMS-MS survey scan information and/or trapped ion mobility - MS survey scan information.

### Third mode

In one example, the set of modes includes:
a third mode, wherein the DMS is configured to transmit the ions without separation, for example using a symmetric waveform and/or a DC bias.

It should be understood that the third mode comprises and/or is a transfer mode (also known as a transmission mode or pass-through mode), wherein the ions are transmitted through the DMS without separation and optionally, without attenuation. In this way, the unseparated ions may be transmitted downstream of the DMS, for example for processing and/or quantitative measurement of their abundances. i.e. DMS behaves as an ion guide, use a symmetric waveform. Gas flow alone may be sufficient to transfer analyte ions with minimal losses through the DMS, without use of an RF waveform (symmetric or asymmetric), particularly for ions of relatively higher m/z (for example, few kDa). The carrier gas for transporting ions through the DMS is gas from the ESI source, for example filtered or purified air. Different gases can be introduced through the source, such a nitrogen, helium or mixtures of gases to optimize transmission and/or separation. It should be understood that using a DC bias means that the same voltage applied to all electrodes of the DMS, allowing all mobility ranges to transfer through the DMS. In contrast, a compensation voltage applied to the electrodes of the DMS provides a dipole field, allows a selected mobility range to transfer through the DMS.

In one example, the controller is configured to control the DMS in the third mode to transfer the ions, for example all the ions, to a trapping device, preferably to an ion mobility trapping device, most preferably to a trapped ion mobility spectrometer. This third mode is desirable for measuring ions exhibiting similar CV values with overlapping distributions in the DMS spectrum. This is possible since the orthogonality between DMS and ion mobility systems operated in the low-field regime will increase the likelihood that these species are separated in the trapped ion mobility spectrometer. Additionally, this third mode allows generation of trapped ion mobility MS survey scans and/or operation of the trapped ion mobility spectrometer with parallel accumulation for serial fragmentation.

### Fourth mode

In one example, the set of modes includes:
a fourth mode, wherein the DMS is configured to separate the ions and to selectively, for example preferentially, transmit the separated ions according to respective abundances thereof, for example using an asymmetric waveform and/or a modulated compensation voltage.

In this way, relatively lower abundance ions are selectively, for example preferentially, transmitted through the DMS compared with relatively higher abundance ions, thereby relatively increasing the respective total charges (i.e. integrated ion currents) of the relatively lower abundance ions. It should be understood that the respective fluxes (i.e. ion currents) of the relatively lower abundance ions may not be increased but the relatively lower abundance ions may be selectively, for example preferentially, transmitted through the DMS for relatively longer durations compared with the relatively higher abundance ions, thereby relatively increasing the respective total charges (i.e. integrated ion currents) of the relatively lower abundance ions. In this way, the detection of fragment ions originating from low abundance analytes that are preferentially transmitted is enhanced, leading for example, to additional protein identifications in a sample.

In one example, the controller is configured to control the DMS in the fourth mode to selectively transmit the separated ions to normalize (across the mobility range) the total flux, for example within a predetermined flux range. In this way, relatively lower abundance ions are preferentially transmitted compared with relatively higher abundance ions. In one example, the modulated compensation voltage comprises a relatively lower CV ramp rate for the relatively lower abundance ions and a relatively higher CV ramp rate for the relatively higher abundance ions.

In one example, the controller is configured to control the DMS in the fourth mode to transmit a predetermined total charge, for example within a predetermined total charge range, for example as described with respect to the second mode mutatis mutandis.

In one example, the controller is configured to control the DMS in the fourth mode to ramp a CV to follow a shape of a DMS spectrum, for example obtained using the first mode, whereby the ion current, due to separated ions transmitted through the DMS, is relatively constant or constant as a function of CV. In this way, the respective fluxes of the separated ions, transmitted through the DMS, are normalized.

### Fifth mode

In one example, the set of modes includes:
a fifth mode, wherein the DMS is configured to separate the ions and to selectively filter the separated ions by selectively parking the respective compensation voltages of the separated ions, for example for respective durations.

It should be understood that the fifth mode comprises and/or is a fractionation mode. In other words, in the fifth mode, an internal stepping CV approach is adopted whereby selected CV levels for generating a modulated or stepped CV scan may coincide with one or more local maxima present in a DMS spectrum, in which case these fractions can either be stored in a trapping device such as the trapped ion mobility spectrometer, or directly transferred to the mass analyzer, preferably a TOF mass analyzer, without being separated in a trapped ion mobility analyzer.

Intelligent selection of peptides from complex protein digests subjected to fragmentation is a performance-limiting factor in tandem mass spectrometry (MS). The problem is mainly attributed to the large number of co-eluting peptides and limitations in the duty cycle of the mass spectrometer arranged to operate in data-dependent acquisition (DDA) mode whereby precursor ions are selected sequentially for fragmentation in order of decreasing intensity. Furthermore, the depth of proteomic analyses is also limited by the overwhelming proportion of background ions that compromise the identification and quantification of low abundance peptides. Whether low-intensity precursors are selected for fragmentation is primarily dictated by the speed at which the mass analyzer can perform tandem MS analysis. The dynamic range of the analysis in DDA mode can be extended by excluding previously analyzed precursor ions, but this strategy is no longer efficient for highly complex samples with an extended dynamic range in concentration. The duty cycle of the MS remains a problem even in data-independent acquisition (DIA) mode where all ions within a selected mass-to-charge range are selected for fragmentation. The issue of sample complexity is addressed at the expense of duty cycle by fractionating the sample using multiple sample injections, each performed with a different CV being applied to the DMS to extend the depth of proteomics analysis.

DMS systems integrated to LC-MS and operated in DDA mode have been described, for example in US9500624B2. In this method, the filtering functionality of the DMS apparatus is switched on and off during an LC-MS experiment to alternate between high ion transmission and fractionation. More specifically, the asymmetric waveform and the CV required for filtering are switched off to allow all ion species to be transferred to the MS and to record a survey scan with ion intensity/abundance information for each precursor, without bias and with high sensitivity, similarly to a conventional LC-MS device operated without DMS. Following a survey scan, the DMS filtering action is applied to selectively transfer ions according to their differential mobility properties. The DMS operating parameters for preferentially transmitting ions are based on survey scan information generated by using the mass spectrometer and include m/z and ion abundance information, which are subsequently used to calculate values for the amplitude of the asymmetric waveform and the CV.

A linear scan of the CV is typically performed to generate a DMS spectrum and signal ion intensities are representative of the concentration in the sample. In contrast, different approaches have been developed for scanning the CV to fractionate complex protein samples in LC-MS analytical workflows and to deconvolve overlapping peptide signals. These methods involve either stepping the CV during an LC-MS analysis (internal CV stepping) thus filtering out all ions falling outside the transmission window when a given CV level is applied and, or performing multiple LC-MS analyses on the same sample at different CV levels (external CV stepping) thus extending the length of the experiment considerably. Additionally, multiple analyses can be performed on the same sample and different CV values are stepped in every analysis to increase the number of fractions processed by MS2.

In particular, the stepped CV, also termed internal stepping CV approach, may involve parking the CV to different levels for a predetermined period, typically in the order of 25ms, and applying each of the selected CVs to sequential survey scans. The CV applied to the MS/MS scans is then paired with the appropriate CV level from the corresponding survey scan. A typical range for the CV required to transmit all peptides is approximately 150V wide, however, in a standard experiment adopting the stepped CV approach, only a narrow range of CVs is applied corresponding to regions in the DMS spectrum where the higher charge state peptides are located while singly charged ions are typically excluded. Including up to four CV levels in an LC-MS experiment in DDA mode typically leads to more peptide identifications. In contrast, a single CV value is preferred in DMS LC-MS when the DIA mode is applied. Importantly, all peptides with transmission characteristics falling outside of the selected CV levels are filtered out and the corresponding peptide/protein information is lost. Additionally, when a stepped CV approach is adopted, the period that each CV level is applied to the DMS electrodes is primarily determined by the ion residence time in the DMS analyzer. Finally, in all these methods where the stepped CV approach is adopted, a significant fraction of precursor ions is lost, and only selected fractions can be analyzed in greater depth.

In one example, a correlation between differential ion mobility and the mass-to-charge ratio of the ions is established, whereby a correlation between the CV levels applied during a CV ramp and 1/k0 regions is formulated since the correlation between mass-to-charge and the low-field ion mobility k0 is generally established. In one example, based on the correlation principles outlined here, a stepped CV approach is adopted whereby the selected CV levels applied to the DMS apparatus are adjusted to deliver groups or fractions of ions to the trapped ion mobility spectrometer with mass-to-charge and low-field ion mobility properties within the boundaries defined by the scan regions. For example, a first DMS ramp may be designed with a first set of predetermined CV levels to deliver ions with mass-to-charge ratios and low-field ion mobility characteristics of a first region of the DMS spectrum. A subsequent DMS ramp can be designed with a second set of predetermined CV levels to deliver ions with properties corresponding to second region of the DMS spectrum and a third set of CV levels corresponding to a third region of the DMS spectrum. This processing cycle can be repeated multiple times during the LC gradient, using intermediate trapped ion mobility - MS survey scans to define the high-density regions in the two-dimensional map, and tailor the CV levels applied to consecutive CV ramps accordingly, thus increasing the duty cycle of the instrument and increasing the depth of the analysis of complex protein and/or peptide samples. Preferably, as an example of a high duty cycle process, the second set of CV levels delivering ions to the pre-storage region of the trapped ion mobility spectrometer is applied while the first group or fraction of ions corresponding to the first set of CV levels is being separated and ejected from the analyzer region of the trapped ion mobility spectrometer, similarly to the parallel accumulation serial fragmentation approach.

In one example, the CV ramp is varied in a synchronous manner with a trapped ion mobility scan, and preferably, the CV levels in each ramp will pass those ions to the ion mobility spectrometer, which will be released upon transfer, such that the ions are not stored during the entire scan of the trapped ion mobility spectrometer, thus increasing the duty cycle of the method by processing more ions faster while also reducing or eliminating undesired effects associated with trapping and storing an excessive amount space charge. In one example, consecutive CV ramps are applied concurrently with the scanning functionality of the trapped ion mobility spectrometer, while the mass-to-charge windows applied to a quadrupole mass filter for selecting precursor ions for fragmentation are synchronously adjusted. This synchronous operation of the low pressure DMS coupled to a trapped ion mobility spectrometer and a quadrupole mass spectrometer essential enhances the duty cycle of the analysis providing in-depth characterization of complex samples by mass spectrometry.

In one example, a DMS survey scan is followed by one or multiple/sequential modulated DMS scans. Based on the DMS survey scan spectrum, the modulated CV ramp is designed to provide downstream to a trapping device or to a trapped ion mobility spectrometer a constant flux of ions across all the CV values comprising a CV ramp. Generating a constant flux of ions during a DMS scan requires both attenuating and also augmenting the ion signal depending on ion abundance. Attenuating ions requires ramping and/or stepping the CV through the bright regions of the DMS survey scan faster. Augmenting the ion signal requires ramping and/or stepping the CV through the low-ion-signal regions of the DMS survey scan slower, thus allowing more time for low abundance ions to be transferred and accumulated in a downstream trapping device. The form of the non-linear CV ramp can therefore be matched to the spectral features of a DMS spectrum produced in a survey scan to level-off the ion signal across all CV values of a CV ramp applied in a DMS scan.

Generally, a product of the CV scan period and the ion signal (ion current) level defines the total number of charges transferred to a downstream trapping device. In one example, the total number of charges transferred downstream is equal or comparable to a space charge capacity of the trapping device. In this way, undesired mass discrimination effects are eliminated and the overall performance improved, for example, by allowing a trapped ion mobility spectrometer to maintain high transmission, high ion mobility resolution and to avoid ion suppression effects and RF heating leading to uncontrolled fragmentation.

### Switching modes

In one example, the controller is configured to switch between modes of the set of modes: within a scan, between successive scans, within a cycle and/or between successive cycles.

In one example, the controller is configured to switch between the second mode, the third and/or the fourth mode within a scan, to normalize (across the mobility range) the total flux, for example within a predetermined flux range. In this way, respective fluxes of relatively higher abundance ions may be selectively attenuated compared with respective fluxes of relatively lower abundance ions (second mode) while relatively lower abundance ions may be preferentially transmitted compared with relatively higher abundance ions (fourth mode).

In one example, the controller is configured to switch between the second mode, the third and/or the fourth mode within a scan, to transmit a predetermined total charge, for example within a predetermined total charge range.

In one example, the modes of the set of modes are interleaved within a cycle or combined in a consecutive manner. A series of cycles can be applied sequentially during a LC gradient tailoring these methods in every cycle independently based on DMS survey scan information, DMS-MS survey scan information and/or trapped ion mobility - MS survey scan information. Tailored cycles offer optimum fractionation of complex samples, resolve suppression effects in trapping devices and increase the depth of the analysis by maximizing the number of peptide and protein identifications.

### Second aspect

The second aspect provides an apparatus comprising:
a series of mutually fluidically coupled vacuum chambers, including a first vacuum chamber and a second vacuum chamber; and
a controller;
wherein the first vacuum chamber comprises: an ion inlet, for introduction of ions therethrough from an ion source; and a first ion guide, wherein the first ion guide is configured to guide the ions introduced through the ion inlet towards the second vacuum chamber, for example via a differential pressure aperture;
wherein the second vacuum chamber comprises: a differential mobility spectrometer, DMS; and
wherein the controller is communicatively coupled to the DMS;
characterized by:
   wherein the controller is configured to control the DMS in a set of modes, wherein the set of modes includes:
   a first mode, wherein the DMS is configured to separate the ions, for example using an asymmetric waveform and/or a ramped compensation voltage; and
   a fourth mode, wherein the DMS is configured to separate the ions and to selectively, for example preferentially, transmit the separated ions according to respective abundances thereof, for example using an asymmetric waveform and/or a modulated compensation voltage.

The apparatus according to the second aspect is generally as described with respect to the apparatus according to the first aspect mutatis mutandis. In contrast with the apparatus according to the first aspect, the set of modes of the apparatus according to the second aspect includes the first mode, the fourth mode and optionally, the second mode, third mode and/or fifth mode.

### Third aspect

The third aspect provides an apparatus comprising:
a series of mutually fluidically coupled vacuum chambers, including a first vacuum chamber and a second vacuum chamber; and
a controller;
wherein the first vacuum chamber comprises: an ion inlet, for introduction of ions therethrough from an ion source; and a first ion guide, wherein the first ion guide is configured to guide the ions introduced through the ion inlet towards the second vacuum chamber, for example via a differential pressure aperture;
wherein the second vacuum chamber comprises: a differential mobility spectrometer, DMS; and
wherein the controller is communicatively coupled to the DMS;
characterized by:
   wherein the controller is configured to control the DMS in a set of modes, wherein the set of modes includes:
   a first mode, wherein the DMS is configured to separate the ions, for example using an asymmetric waveform and/or a ramped compensation voltage; and
   a fifth mode, wherein the DMS is configured to separate the ions and to selectively filter the separated ions by selectively parking the respective compensation voltages of the separated ions, for example for respective durations.

The apparatus according to the third aspect is generally as described with respect to the apparatus according to the first aspect mutatis mutandis. In contrast with the apparatus according to the first aspect, the set of modes of the apparatus according to the third aspect includes the first mode, the fifth mode and optionally, the second mode, third mode and/or fifth mode.

### Fourth aspect

The fourth aspect provides an apparatus comprising:
a differential mobility spectrometer, DMS; and
a controller;
wherein the controller is communicatively coupled to the DMS;
characterized by:
   wherein the controller is configured to control the DMS in a set of modes, wherein the set of modes includes:
   a first mode, wherein the DMS is configured to separate the ions, for example using an asymmetric waveform and/or a ramped compensation voltage; and
   a second mode, wherein the DMS is configured to separate the ions and to selectively attenuate respective fluxes of the separated ions according to respective abundances thereof, for example using an asymmetric waveform and/or a modulated compensation voltage.

The apparatus according to the fourth aspect is generally as described with respect to the apparatus according to the first aspect mutatis mutandis. In contrast with the apparatus according to the first aspect, the DMS is not limited to being comprised in a second vacuum chamber of a series of mutually fluidically coupled vacuum chambers, including a first vacuum chamber and the second vacuum chamber. For example, the first vacuum chamber may comprise the DMS or a third vacuum chamber may comprise the DMS. For example, the DMS may comprise and/or be an atmospheric pressure DMS directly coupled to an ESI source and to the inlet of the first vacuum chamber and the apparatus may comprise an atmospheric pressure (i.e. not a vacuum) chamber comprising the DMS.

### Fifth aspect

The fifth aspect provides an apparatus comprising:
a differential mobility spectrometer, DMS; and
a controller;
wherein the controller is communicatively coupled to the DMS;
characterized by:
   wherein the controller is configured to control the DMS in a set of modes, wherein the set of modes includes:
   a first mode, wherein the DMS is configured to separate the ions, for example using an asymmetric waveform and/or a ramped compensation voltage; and
   a fourth mode, wherein the DMS is configured to separate the ions and to selectively, for example preferentially, transmit the separated ions according to respective abundances thereof, for example using an asymmetric waveform and/or a modulated compensation voltage.

The apparatus according to the fifth aspect is generally as described with respect to the apparatus according to the second aspect mutatis mutandis. In contrast with the apparatus according to the second aspect, the DMS is not limited to being comprised in a second vacuum chamber of a series of mutually fluidically coupled vacuum chambers, including a first vacuum chamber and the second vacuum chamber. For example, the first vacuum chamber may comprise the DMS or a third vacuum chamber may comprise the DMS. For example, the DMS may comprise and/or be an atmospheric pressure DMS and the apparatus may comprise an atmospheric pressure (i.e. not a vacuum) chamber comprising the DMS.

### Sixth aspect

The sixth aspect provides an apparatus comprising:
a differential mobility spectrometer, DMS; and
a controller;
wherein the controller is communicatively coupled to the DMS;
characterized by:
   wherein the controller is configured to control the DMS in a set of modes, wherein the set of modes includes:
   a first mode, wherein the DMS is configured to separate the ions, for example using an asymmetric waveform and/or a ramped compensation voltage; and
   a fifth mode, wherein the DMS is configured to separate the ions and to selectively filter the separated ions by selectively parking the respective compensation voltages of the separated ions, for example for respective durations.

The apparatus according to the sixth aspect is generally as described with respect to the apparatus according to the third aspect mutatis mutandis. In contrast with the apparatus according to the third aspect, the DMS is not limited to being comprised in a second vacuum chamber of a series of mutually fluidically coupled vacuum chambers, including a first vacuum chamber and the second vacuum chamber. For example, the first vacuum chamber may comprise the DMS or a third vacuum chamber may comprise the DMS. For example, the DMS may comprise and/or be an atmospheric pressure DMS and the apparatus may comprise an atmospheric pressure (i.e. not a vacuum) chamber comprising the DMS.

### Seventh aspect

The seventh aspect provides a method of controlling a differential mobility spectrometer, DMS, the method implemented, at least in part by a computer comprising a processor and a memory, the method comprising:
controlling the DMS in a set of modes, wherein the set of modes includes:
a first mode, wherein the DMS separates the ions, for example using an asymmetric waveform and/or a ramped compensation voltage; and
a second mode, wherein the DMS separates the ions and selectively attenuates respective fluxes of the separated ions according to respective abundances thereof, for example using an asymmetric waveform and/or a modulated compensation voltage.

The method according to the seventh aspect may be generally as described with respect to the apparatus according to the first aspect mutatis mutandis and/or the fourth aspect mutatis mutandis. For example, the method according to the seventh aspect may include any steps as described with respect to the apparatus according to the first aspect and/or the fourth aspect.

### Eighth aspect

The eighth aspect provides a method of controlling a differential mobility spectrometer, DMS, the method implemented, at least in part by a computer comprising a processor and a memory, the method comprising:
controlling the DMS in a set of modes, wherein the set of modes includes:
a first mode, wherein the DMS separates the ions, for example using an asymmetric waveform and/or a ramped compensation voltage; and
a fourth mode, wherein the DMS separates the ions and selectively, for example preferentially, transmits the separated ions according to respective abundances thereof, for example using an asymmetric waveform and/or a modulated compensation voltage.

The method according to the eighth aspect may be generally as described with respect to the apparatus according to the second aspect mutatis mutandis and/or the fifth aspect mutatis mutandis. For example, the method according to the eighth aspect may include any steps as described with respect to the apparatus according to the second aspect and/or the fifth aspect

### Ninth aspect

The ninth aspect provides a method of controlling a differential mobility spectrometer, DMS, the method implemented, at least in part by a computer comprising a processor and a memory, the method comprising:
controlling the DMS in a set of modes, wherein the set of modes includes:
a first mode, wherein the DMS separates the ions, for example using an asymmetric waveform and/or a ramped compensation voltage; and
a fifth mode, wherein the DMS separates the ions and selectively filters the separated ions by selectively parking the respective compensation voltages of the separated ions, for example for respective durations.

The method according to the ninth aspect may be generally as described with respect to the apparatus according to the third aspect mutatis mutandis and/or the sixth aspect mutatis mutandis. For example, the method according to the ninth aspect may include any steps as described with respect to the apparatus according to the third aspect and/or the sixth aspect.

### Tenth aspect

The tenth aspect provides: a computer comprising a processor and a memory configured to implement a method according to any of the seventh aspect, the eighth aspect and/or the ninth aspect; a computer program comprising instructions which, when executed by a computer comprising a processor and a memory, cause the computer to perform a method according to any of the seventh aspect, the eighth aspect and/or the ninth aspect: and/or a non-transient computer-readable storage medium comprising instructions which, when executed by a computer comprising a processor and a memory, cause the computer to perform a method according to any of the seventh aspect, the eighth aspect and/or the ninth aspect.

### Eleventh aspect

The eleventh aspect provides an apparatus comprising:
a series of mutually fluidically coupled vacuum chambers, including a first vacuum chamber and a second vacuum chamber;
wherein the first vacuum chamber comprises: an ion inlet, for introduction of ions therethrough from an ion source; and a first ion guide, wherein the first ion guide is configured to guide the ions introduced through the ion inlet towards the second vacuum chamber, for example via a differential pressure aperture; and
wherein the second vacuum chamber comprises: a differential mobility spectrometer, DMS.

In this way, electrode surface contamination is reduced and/or instrument robustness is improved, since the DMS is outside the line-of-sight of the beam-spray produced in an ESI source and the ensuing plume of charged cluster ions and neutral contaminants expanding freely in the first vacuum chamber.

The apparatus according to the eleventh aspect is generally as described with respect to the apparatus according to the first aspect mutatis mutandis.

### Definitions

Throughout this specification, the term "comprising" or "comprises" means including the component(s) specified but not to the exclusion of the presence of other components. The term "consisting essentially of' or "consists essentially of' means including the components specified but excluding other components except for materials present as impurities, unavoidable materials present as a result of processes used to provide the components, and components added for a purpose other than achieving the technical effect of the invention, such as colourants, and the like.

The term "consisting of" or "consists of' means including the components specified but excluding other components.

Whenever appropriate, depending upon the context, the use of the term "comprises" or "comprising" may also be taken to include the meaning "consists essentially of" or "consisting essentially of', and also may also be taken to include the meaning "consists of' or "consisting of'.

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

### Brief description of the drawings

For a better understanding of the invention, and to show how exemplary embodiments of the same may be brought into effect, reference will be made, by way of example only, to the accompanying diagrammatic Figures, in which:
Figure 1 schematically depicts an apparatus according to an exemplary embodiment;
Figure 2 schematically depicts an apparatus according to an exemplary embodiment;
Figure 3 schematically depicts an apparatus according to an exemplary embodiment;
Figure 4A schematically depicts a method according to an exemplary embodiment;
Figure 4B schematically depicts a method according to an exemplary embodiment;
Figure 5 schematically depicts a method according to an exemplary embodiment;
Figure 6 schematically depicts a method according to an exemplary embodiment; and
Figure 7 schematically depicts a method according to an exemplary embodiment.

### Detailed Description of the Drawings

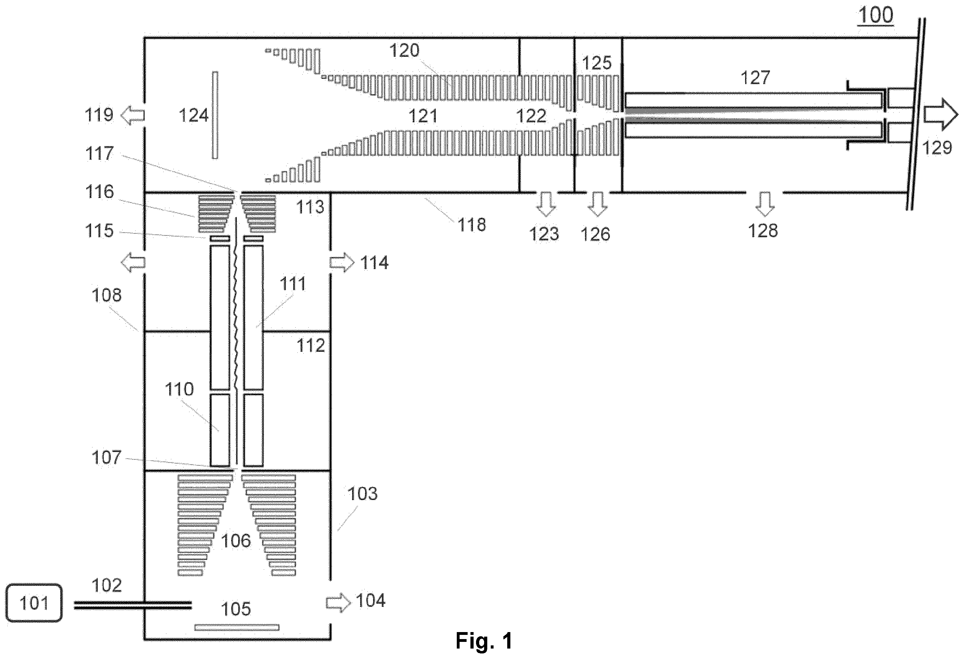

Figure 1 schematically depicts an apparatus 100 according to an exemplary embodiment. The apparatus 100 comprises: a series of mutually fluidically coupled vacuum chambers, including a first vacuum chamber (or region) 103 and a second vacuum chamber (or region) 108; and a controller (not shown). The first vacuum chamber 103 comprises: an ion inlet 102, for introduction of ions therethrough from an ion source 101; and a first ion guide 106, wherein the first ion guide 106 is configured to guide the ions introduced through the ion inlet 102 towards the second vacuum chamber 108, for example via a differential pressure aperture 107. The second vacuum chamber 108 comprises: a differential mobility spectrometer, DMS 111. The controller is communicatively coupled to the DMS 111.

The controller is configured to control the DMS 111 in a set of modes, wherein the set of modes includes:
a first mode, wherein the DMS 111 is configured to separate the ions, for example using an asymmetric waveform and/or a ramped compensation voltage; and
a second mode, wherein the DMS 111 is configured to separate the ions and to selectively attenuate respective fluxes of the separated ions according to respective abundances thereof, for example using an asymmetric waveform and/or a modulated compensation voltage; and/or a third mode, wherein the DMS 111 is configured to transmit the ions without separation, for example using a symmetric waveform and/or a DC bias; and/or
a fourth mode, wherein the DMS 111 is configured to separate the ions and to selectively, for example preferentially, transmit the separated ions according to respective abundances thereof, for example using an asymmetric waveform and/or a modulated compensation voltage; and/or a fifth mode, wherein the DMS 111 is configured to separate the ions and to selectively filter the separated ions by selectively parking the respective compensation voltages of the separated ions, for example for respective durations.

In more detail, ions are produced in an ESI source 101 at near-ambient pressure and transferred through a heated inlet 102 into the first vacuum region 103 of a mass spectrometer 100 maintained at a pressure of 1 to 50 mbar, most preferably in the pressure range of 5 to 20 mbar using a mechanical pump. The pumping port 104 on the first vacuum region can be positioned facing the inlet 102 to receive the excess gas and neutral particles produced in the ESI source 101. A repelling DC bias is applied to electrode 105 to deflect all ions from the free jet gas towards an ion funnel device 106. Ions are focused through a differential aperture 107 in a second vacuum region 108 of the mass spectrometer 100. Ions are subsequently confined in an RF ion guide 110 configured to laminarize the low-pressure gas flow established by the pressure difference in the first 103 and second 108 vacuum regions. The RF ion guide 110 is coaxially coupled with a low pressure DMS 111 configured to sustain the laminar flow throughout the length of the separation channel where the asymmetric waveform and the CV signals are applied for transferring, filtering and/or fractionating complex mixtures of ions. The second vacuum region 108 is designed with a first 112 and a second 113 vacuum compartment whereby a symmetric pumping scheme 114 is applied only to the second compartment 113. The pumping speed applied by pumping means through ports 114 can be adjusted by a valve. A fully open valve will maximize the pumping speed applied through ports 114 while a closed valve will force the gas flow to pass through the differential aperture 117. Adjustments introduced through the valve are desirable to control the properties of the laminarized gas flow established through the separation channel of the DMS. Preferably, the pressure in the RF ion guide and the DMS apparatus is maintained in the range of 1 to 50 mbar, most preferably in the pressure range of 5 to 20 mbar. A system of electrodes is disposed at the exit of the DMS channel with at least one electrode 115 selectively switched between a first level for transmitting ions and a second level for collecting the DMS output ion current measured using an electrometer for generating DMS spectra. Ions transferred through the DMS 111 can be focused using a second ion funnel 116 through a second differential aperture 117 into a third vacuum region 118 evacuated by pumping means 119 and accommodating a trapped ion mobility spectrometer 120 configured with a pre-trapping region 121 to enable parallel accumulation of ions, separated from the analyzer region 122. Pressure in the analyzer region is controlled by pumping means connected to port 123. An additional repelling DC bias is applied to electrode 124 to direct the ions into the trapped ion mobility device 120. Ions processed in the DMS 111 and in the trapped ion mobility device 120 are subsequently transferred through a short ion funnel 125 evacuated to sub-mbar pressure levels by pumping means 126 and an additional RF ion guide 127 to downstream optics 129 operable at a higher vacuum established by a turbomolecular pump connected to port 128. Ions processed further by downstream optics 129 are subjected to mass selection, fragmentation, and detection, which are typically performed with LC-MS instrumentation supporting DDA and DIA analytical workflows.

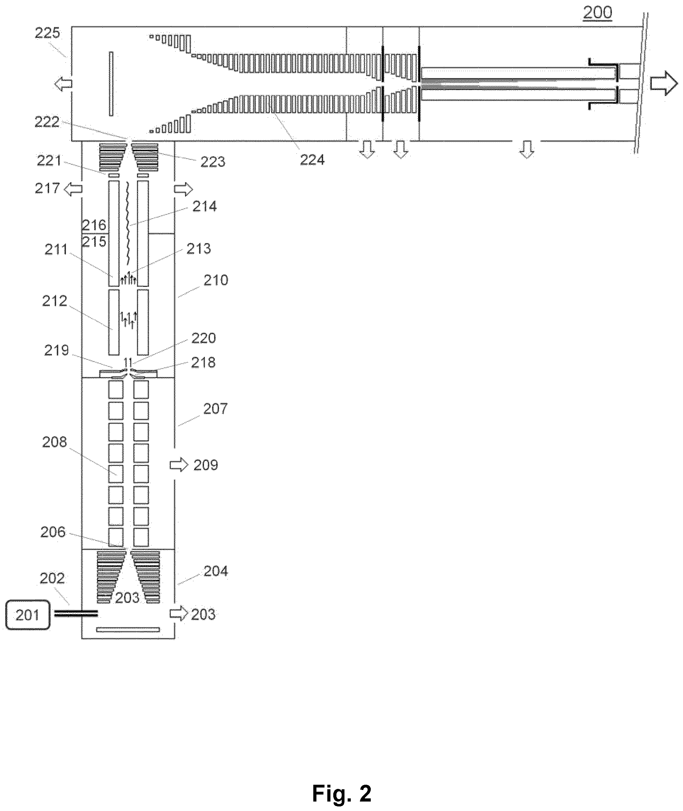

Figure 2 schematically depicts an apparatus 200 according to an exemplary embodiment. The apparatus 200 comprises: a series of mutually fluidically coupled vacuum chambers, including a first vacuum chamber (or region) 204 and a second vacuum chamber (or region) 207; and a controller (not shown). The first vacuum chamber 204 comprises: an ion inlet 202, for introduction of ions therethrough from an ion source 201; and a first ion guide 203, wherein the first ion guide 203 is configured to guide the ions introduced through the ion inlet 202 towards the second vacuum chamber 207, for example via a differential pressure aperture 206. The second vacuum chamber 207 comprises: a differential mobility spectrometer, DMS 211. The controller is communicatively coupled to the DMS 211.

The controller is configured to control the DMS 211 in a set of modes, wherein the set of modes includes:
a first mode, wherein the DMS 211 is configured to separate the ions, for example using an asymmetric waveform and/or a ramped compensation voltage; and
a second mode, wherein the DMS 211 is configured to separate the ions and to selectively attenuate respective fluxes of the separated ions according to respective abundances thereof, for example using an asymmetric waveform and/or a modulated compensation voltage; and/or a third mode, wherein the DMS 211 is configured to transmit the ions without separation, for example using a symmetric waveform and/or a DC bias; and/or
a fourth mode, wherein the DMS 211 is configured to separate the ions and to selectively, for example preferentially, transmit the separated ions according to respective abundances thereof, for example using an asymmetric waveform and/or a modulated compensation voltage; and/or a fifth mode, wherein the DMS 211 is configured to separate the ions and to selectively filter the separated ions by selectively parking the respective compensation voltages of the separated ions, for example for respective durations.

In more detail, ions produced in an ESI source 201 are sampled by a heated capillary inlet 202. The ions are subsequently focused using an ion funnel 203 disposed in the first vacuum region 204 of the mass spectrometer apparatus 200 evacuated to mbar pressure levels by a first pump connected to port 205 through the first differential aperture 206 into the second vacuum region 207 accommodating an additional transfer RF ion guide 208 operable in the pressure range of <1 mbar by a turbomolecular pump 209. A DC field gradient is provided by segmenting the transfer RF ion guide 208 and providing different DC components to each segment to transfer ions across the device. The axial DC field of the transfer RF ion guide 208 can be further configured to provide axial trapping and ejection of the ions to downstream optics. In addition, ions can be accelerated at the entrance of the transfer RF ion guide to kinetic energies sufficiently high to promote desolvation of the ions produced in the ESI source 201 and without fragmentation. A third vacuum region 210 is provided and operated at a higher pressure of >1 mbar to enable processing of ions using a DMS apparatus 211. The third vacuum region is configured to accommodate an RF ion guide 212 coaxially coupled to the DMS 211 for shaping the gas and providing a low-pressure laminar flow 213 at the entrance-end of the DMS apparatus. The DMS is designed to sustain the laminar flow through the length of the separation channel where ions 214 are guided and/or separated under the influence of the asymmetric RF waveforms and the CV signals. Preferably, the third vacuum region 210 is designed with a first 215 and a second 216 vacuum compartment whereby pumping 217 is applied only to the second compartment 216, while pressure is maintained in the range of 5 to 20 mbar. The second differential aperture 218 is configured to minimize the upstream gas flow opposing the ion flow either by providing an additional pumping region or by using a curtain gas in/through the volume generated between the aperture 218 and an additional electrode 219. The transfer efficiency for ions moving against the gas flow due to the pressure difference established between the second 207 and third 210 vacuum regions is therefore enhanced. The elevated pressure in the third vacuum region 210 is established by the curtain gas introduced through the volume established between the differential aperture 218 and the additional electrode 219. The gas flow streamlines 220 are coaxial to the DMS 211 and the RF ion guide 212 to generate the laminarized gas flow 213 for transporting and/or filtering ions through the DMS separation channel with high efficiency. Additional electrodes can be placed in the gap between electrode 219 and the entrance of the RF ion guide 212 for shaping the gas flow streamlines 220. At least one electrode 221 disposed downstream of the DMS is selectively switched between a first level for transmitting ions and a second level for collecting the DMS output ion current to generate DMS spectra. Ions transferred through the DMS are focused through a third differential aperture 222 using an ion funnel 223 into a trapped ion mobility spectrometer 224 accommodated in a fourth vacuum region 225 and coupled to a pre-trapping region to enable parallel accumulation of ions. Ions processed in the DMS 211 and in the trapped ion mobility spectrometer 224 are subsequently subjected to the steps of mass selection, fragmentation, and detection, typically performed with LC-MS instrumentation supporting DDA and DIA analytical workflows.

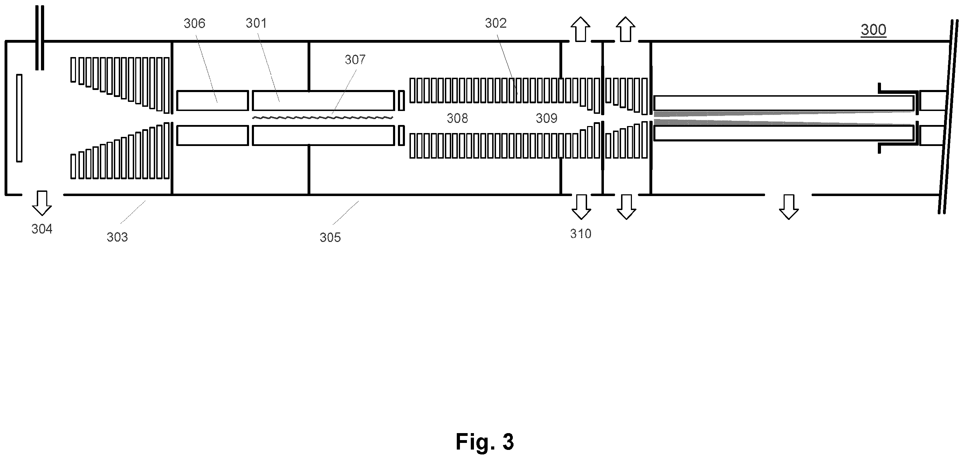

Figure 3 schematically depicts an apparatus 300 according to an exemplary embodiment. The apparatus 300 comprises: a series of mutually fluidically coupled vacuum chambers, including a first vacuum chamber (or region) 303 and a second vacuum chamber (or region) 305; and a controller (not shown). The first vacuum chamber 303 comprises: an ion inlet (not shown), for introduction of ions therethrough from an ion source (not shown); and a first ion guide (not shown), wherein the first ion guide is configured to guide the ions introduced through the ion inlet towards the second vacuum chamber 305, for example via a differential pressure aperture. The second vacuum chamber 305 comprises: a differential mobility spectrometer, DMS 301. The controller is communicatively coupled to the DMS 301.

The controller is configured to control the DMS 301 in a set of modes, wherein the set of modes includes:
a first mode, wherein the DMS 301 is configured to separate the ions, for example using an asymmetric waveform and/or a ramped compensation voltage; and
a second mode, wherein the DMS 301 is configured to separate the ions and to selectively attenuate respective fluxes of the separated ions according to respective abundances thereof, for example using an asymmetric waveform and/or a modulated compensation voltage; and/or a third mode, wherein the DMS 301 is configured to transmit the ions without separation, for example using a symmetric waveform and/or a DC bias; and/or
a fourth mode, wherein the DMS 301 is configured to separate the ions and to selectively, for example preferentially, transmit the separated ions according to respective abundances thereof, for example using an asymmetric waveform and/or a modulated compensation voltage; and/or a fifth mode, wherein the DMS 301 is configured to separate the ions and to selectively filter the separated ions by selectively parking the respective compensation voltages of the separated ions, for example for respective durations.

In more detail, the DMS 301 and the trapped ion mobility spectrometer 302 of the ion analysis apparatus 300 are configured to share the same axis. The gas from the first vacuum region 303 maintained in the pressure range of 5 to 20 mbar by pumping means 304 and leaking into the second vacuum region 305 is shaped and laminarized by an RF ion guide 306 disposed upstream of the DMS 301. In this exemplary embodiment, the DMS 301 is in fluid communication with the trapped ion mobility spectrometer 302 and the laminarized gas flow is maintained throughout the DMS separation channel 307 and the trapped ion mobility spectrometer 302 configured with a pre-storage region 308 for parallel accumulation and an analyzer region 309. The laminarized flow is established by pumping means 310 and by shaping the DMS and trapped ion mobility electrodes accordingly. Various pumping schemes can be applied for controlling the laminarized gas flow and the pressure gradient from the DMS apparatus 301 to the trapped ion mobility spectrometer 302. These pumping schemes include exhaust ports to evacuate gas as accomplished by using the exhaust port 310, and without affecting the laminar character of the low-pressure gas flow in the DMS apparatus and the analyzer part 309 of the trapped ion mobility spectrometer. These ports can be included at the exit of the DMS separation channel or near the storage region of the trapped ion mobility spectrometer.

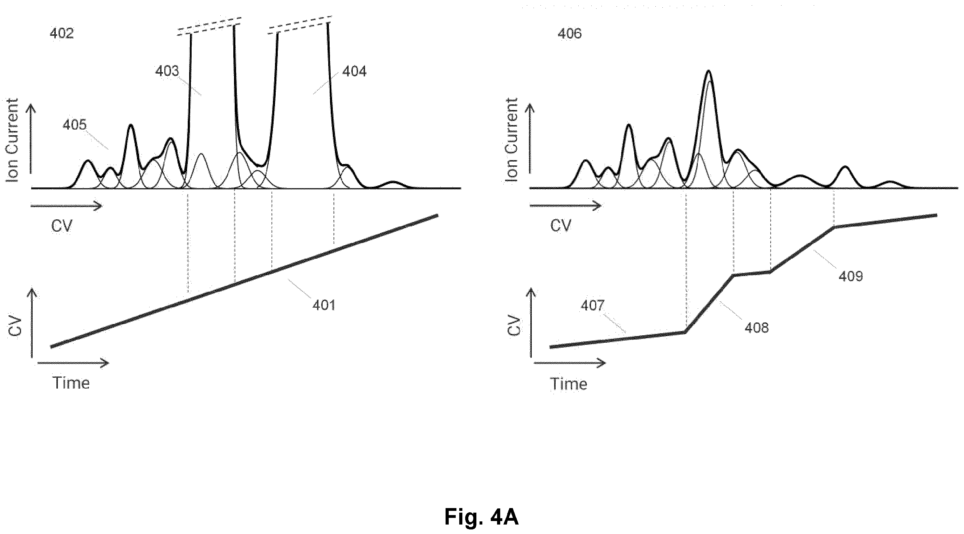

Figure 4A schematically depicts a method according to an exemplary embodiment. The method is of controlling a differential mobility spectrometer, DMS, the method implemented, at least in part by a computer comprising a processor and a memory. The method comprises: controlling the DMS in a set of modes, wherein the set of modes includes:
a first mode, wherein the DMS separates the ions, for example using an asymmetric waveform and/or a ramped compensation voltage; and
a second mode, wherein the DMS separates the ions and selectively attenuates respective fluxes of the separated ions according to respective abundances thereof, for example using an asymmetric waveform and/or a modulated compensation voltage.

In more detail, according to a first preferred method, the DMS is configured to perform a DMS survey scan 401 by ramping the CV to generate a DMS spectrum 402. The spectrum is generated by applying a linear CV ramp 401 using fixed voltage steps applied at regular time intervals and recording the ion current in each step. The intensity of the ion current can be recorded using an electrometer or a mass analyzer containing mass-to-charge information. The voltage range of the CV ramp in a DMS survey scan can be wide enough to include all precursor ions produced in the ESI source or extend over a narrower range of values. DMS survey scans are used to identify the high intensity regions in the DMS spectrum 402. In these high intensity regions that may correspond to one or more CV ranges, the ion intensity is sufficiently high to induce space-charge driven suppression effects in the trapping device disposed downstream of the DMS. In this example, regions 403 and 404 in the DMS spectrum correspond to CV values where precursor ion species with high abundance are transferred through the DMS. The intensity of these high abundance ions can be orders of magnitude greater than the low intensity ions 405, which are visible closer to the baseline of the DMS spectrum 402. The duration of a single CV ramp for performing a DMS survey scan can be 100 ms or longer, most preferably, the CV range of interest can be ramped within less than 100 ms.

The DMS survey scan 402 is followed by one or multiple/sequential modulated DMS scans. The DMS spectrum 406 corresponding to a modulated DMS scan reflects the ion population that will be transferred to a trapping device or to a trapped ion mobility spectrometer whereby the intensity of the most abundant ions is reduced by modulating the CV ramp. In modulated DMS scans, the CV ramp or CV signal comprises a series of voltage steps applied at regular or fixed time intervals, while the voltage step and/or the number of steps are no longer fixed as in ramp 401 but instead these parameters are varied across the different CV scan ranges based on the ion abundance information generated in the preceding DMS survey scan 402. In the example shown in Figure 4A, the DMS survey scan is processed in real-time and the CV values corresponding to the high intensity regions 403 and 304 are used to define one or more range of values in the modulated CV ramp 407 where the CV range is stepped, scanned or ramped faster, for example through regions 408 and 409, to reduce the transmission of the high abundance ions 403 and 404 through the apparatus. A modulated CV scan comprises therefore a non-linear CV ramp with features based on DMS survey scan information processed in real-time. Preferably, in the modulated DMS scan the slope of the ramp corresponding to low intensity ions is fixed and differs from the slope of the CV ramp applied to generate a DMS survey scan. This method allows for reducing the space charge load originating from the high intensity regions observed in the DMS survey scan and transferred to the trapped ion mobility spectrometer to minimize suppression effects. The ions transmitted by a modulated DMS scan are stored and separated according to their low-field ion mobilities in the trapped ion mobility spectrometer and can be further subjected to the steps of mass selection, fragmentation and detection typically performed with LC-MS instrumentation supporting DDA and DIA analytical workflows.

Sequential modulated DMS scans can be performed following a DMS survey scan, jointly forming a processing cycle. These processing cycles are applied sequentially during the LC gradient of an LC-MS experiment. The duration of each of the processing cycles can be varied during the LC gradient, for example, by including a greater number of modulated DMS scans. Alternatively, or jointly, the speed of the modulated CV ramp can also be controlled to adjust the number of ions delivered to the trapped ion mobility spectrometer. Preferably, the speed of the modulated CV ramp and the different slopes of the CV applied are determined by the maximum space charge capacity of the trapped ion mobility analyzer and this can be determined in real-time by monitoring the variations of the ion current produced in the ESI source.

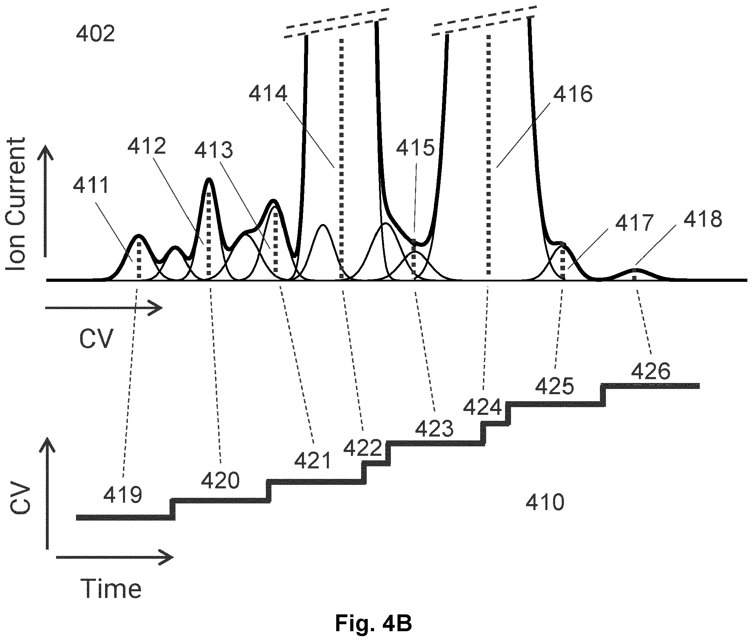

According to a variation of the method shown in Figure 4B, a DMS survey scan 402 is performed, and a set of CV levels are defined and applied in at least one subsequent stepped CV scan 410 based on ion intensity information across the CV range of interest. In this example, the CV levels in the one or more stepped CV scans are evenly spaced across the CV range of interest, while the duration of every step is determined by the ion intensity measured in the DMS scan for the corresponding CV levels. Regions 411, 412, 413, 415, 417 and 418 are lower intensity region and the corresponding CV levels 419, 420, 421, 423, 425 and 426 are applied for a longer period. For the higher intensity regions of the DMS survey scan 414 and 416, the corresponding CV levels of the stepped CV scan 422 and 424 are applied for a shorter period. As a result, the number of charges transferred to a trapping device, preferably to a trapped ion mobility spectrometer, is controlled with high precision by varying the period of each of the CV levels applied in a stepped CV scan. This method eliminates ion suppression and any other undesired effects associated with excessive space charge stored in a trapping device. Furthermore, the speed at which a single stepped CV scan is applied can be calculated by the space charge capacity of the trapped ion mobility spectrometer and the integral of ion current measured in a preceding DMS survey scan. The optimum number of charges or charge load can therefore be transferred to a trapping device in every stepped CV scan during the LC gradient of an LC-MS experiment. Unevenly spaced CV levels can also be selected for performing a stepped CV scan.

A single cycle may include a first DMS or DMS-MS survey scan, followed by one or multiple stepped CV scans to transfer ions in a trapped ion mobility device, matching the space charge capacity of the trapping device, and further including the mobility separation of the transferred ion population using the trapped ion mobility analyzer. Preferably, a stepped CV scan is performed for every trapped ion mobility scan, while multiple trapped ion mobility scans are generally performed to cover the entire ion mobility and mass-to-charge range of the ions separated in the trapped ion mobility analyzer. DMS-MS survey scans where the trapped ion mobility device is operated in transmission or pass-through mode can be used for quantifying precursor ions and, preferably, a single DMS-MS scan is performed within a cycle. Alternatively, MS-only scans can be used instead.

Ion processing in a single cycle therefore includes the steps of performing either a DMS survey scan or a DMS-MS survey scan for further quantifying precursor ions, and without trapping or storing ions in the trapped ion mobility spectrometer, followed by one or more stepped CV scans to transfer the desired precursor ion population to the trapped ion mobility device while eliminating ion suppression effects by matching the space charge capacity across the ion mobility range of the ions stored therein. Cycles are applied sequentially or may overlap during the LC gradient of an LC-MS experiment. Overlapping includes performing a stepped CV scan for transferring ions into the pre-trapping / storage region of the trapped ion mobility analyzer whilst separating ions received from a previous stepped CV scan in the analyzer part of the trapped ion mobility spectrometer. In every cycle, the stepping CV process is optimized by using information provided by the DMS or DMS-MS survey scans. Additionally, ions separated in the trapped ion mobility spectrometer can be further subjected to mass selection, fragmentation and ultimately detection by TOF, steps which are typically performed with LC-MS instrumentation enabling DDA and DIA analytical workflows.

Figure 4B schematically depicts a method according to an exemplary embodiment. The method is of controlling a differential mobility spectrometer, DMS, the method implemented, at least in part by a computer comprising a processor and a memory. The method comprises: controlling the DMS in a set of modes, wherein the set of modes includes:
a first mode, wherein the DMS separates the ions, for example using an asymmetric waveform and/or a ramped compensation voltage; and
a second mode, wherein the DMS separates the ions and selectively attenuates respective fluxes of the separated ions according to respective abundances thereof, for example using an asymmetric waveform and/or a modulated compensation voltage.

In more detail, according to a second preferred method, a stepped CV approach is applied instead of the non-linear CV ramp 407 applied in the method presented in Figure 4A and Figure 4B. Preferably, the CV values applied during the modulated DMS scans are chosen outside of the high intensity regions determined by preceding DMS survey scans. For example, the CV can be stepped through one or more levels across region 405 and in the region between the high intensity DMS peaks 403, 404, to select the lower intensity fractions from the ion population and reduce suppression effects observed when storing the highly abundant ions in the trapped ion mobility spectrometer.

The success of this method relies on the fact that DMS and ion mobility devices operated in the low-field regime such as the trapped ion mobility spectrometer are orthogonal separation methods. For example, the DMS will separate the low abundance peptides from the high abundance peptides exhibiting comparable low-field ion mobilities measured in the trapped ion mobility analyzer. These low abundance species would be lost due to suppression effects if the trapped ion mobility was operated autonomously receiving all ions from the ESI source and without the filtering action of the DMS. The likelihood of detecting peptides with comparable low-field mobilities exhibiting a high dynamic range in concentration is therefore much higher if the DMS is fractionating the ion population delivered to the trapped ion mobility spectrometer.

Different CV levels, and different number of CV levels when applying one or more modulated DMS scans sequentially can be selected based on real-time information generated by fast DMS survey scans preceding the modulated DMS scans. These CV levels and the total number of these levels used for generating a modulated CV scan are optimized to selectively transfer fractions of ions from the complex sample to the trapped ion mobility spectrometer, increasing the depth of the analysis. Preferably, such modulated DMS scans transmitting low abundance ions to the trapped ion mobility spectrometer can be combined or interleaved with one or more trapped ion mobility spectrometer scans, where the DMS is operated in transmission-only mode where no selection or filtering of ions is applied.

Additionally and/or alternatively, according to a third preferred method, the DMS is operated in transmission mode and all ions produced in the ESI source are transferred to the trapped ion mobility device. This mode of operation allows for detecting with higher efficiency the low abundance peptides overlapping with the highest abundance peptides in the DMS spectrum, for example all peaks falling under the high intensity peak 403, since the orthogonality of the two mobility separation methods will increase the likelihood that these two different species are separated in the trapped ion mobility analyzer. The ions processed in the trapped ion mobility spectrometer can be measured directly by a TOF mass analyzer to generate a two-dimensional map containing trapped ion mobility and MS survey scan information, where survey scans in general are used for quantitation of the different ions. Additionally, ions processed in the trapped ion mobility spectrometer can be further subjected to mass selection, fragmentation and ultimately detection by TOF, steps which are typically performed with LC-MS instrumentation in DDA and DIA analytical workflows.

Additionally and/or alternatively, according to a fourth preferred method, the selected CV levels for generating a stepped CV scan may coincide with one or more local maxima present in a DMS spectrum, in which case these fractions can be directly transferred to the mass analyzer, preferably a TOF mass analyzer, without being separated in a trapped ion mobility analyzer. A DMS-MS survey scan is preferably performed first, at the onset of a scan cycle, by stepping the CV through a predetermined number of voltage levels, followed by a series of DMS-MS2 scans stepping through the same voltage levels where fragment ions are generated and detected in the TOF mass analyzer.

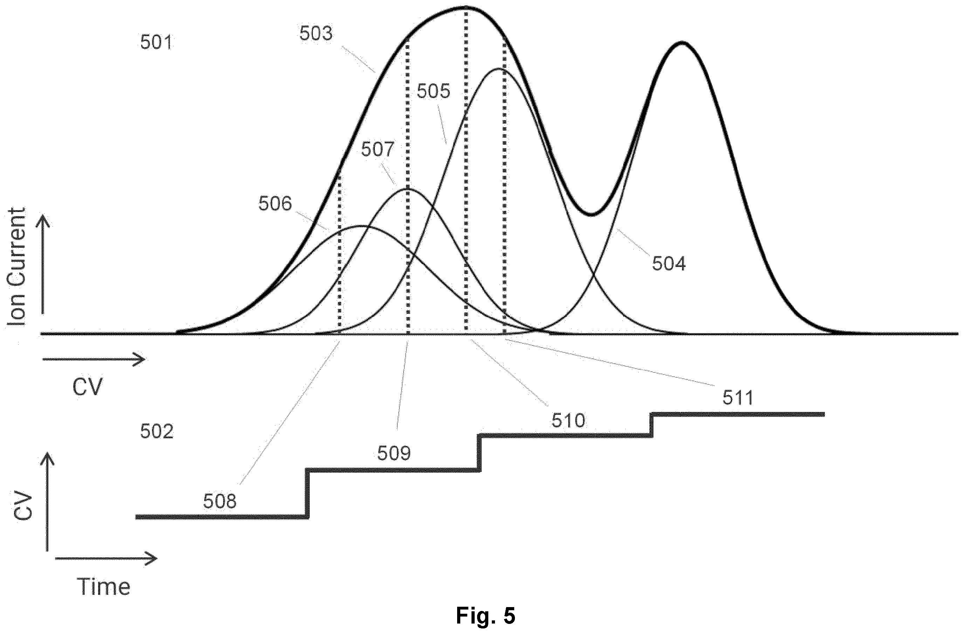

Figure 5 schematically depicts a method according to an exemplary embodiment. The method is of controlling a differential mobility spectrometer, DMS, the method implemented, at least in part by a computer comprising a processor and a memory. The method comprises: controlling the DMS in a set of modes, wherein the set of modes includes:
a first mode, wherein the DMS separates the ions, for example using an asymmetric waveform and/or a ramped compensation voltage; and
a fifth mode, wherein the DMS separates the ions and selectively filters the separated ions by selectively parking the respective compensation voltages of the separated ions, for example for respective durations.

In more detail, Figure 5 shows a DMS spectrum 501 produced by combining all the DMS and/or DMS-MS survey scans performed during an LC-gradient of a protein digest. The spectrum line 503 is the sum of four individual distributions, with each distribution corresponding to a different charge-state. All singly- 504, doubly- 505, triply- 506 and quadruply-charged 507 peptide distributions measured in a sample are centered at different CV values. In this example, there are four CV values applied during the stepped DMS scans with singly charged ions 504 being excluded. In this exemplary embodiment, the CV ramp 502 in a single DMS scan is stepped between these four levels, 508, 509, 510 and 511 while the corresponding CV regions are also highlighted in the DMS spectrum 501. For example, the ion current may be controlled in every selected CV - fraction by measuring the ion current at this position and adjusting the duration of the CV level applied to the DMS to optimally fill the trapping device, preferably a trapped ion mobility analyzer, according to its space charge capacity. Preferably, a DMS or DMS-MS survey scan is applied first, followed by one or more stepped CV scans applied sequentially for generating fragment ions. This cycle can be repeated multiple times during an experiment using the same CV levels or circulating between CV different levels during the LC gradient. The ions filtered by the DMS using the stepped CV level approach, for example a set of four levels shown in Figure 5, can either be directly fragmented in a collision cell or stored and separated in the trapped ion mobility device prior to fragmentation.

In one example, the CV levels are fixed throughout the duration of an LC gradient. In one example, the CV levels are adjusted based on real-time information generated by fast DMS or DMS-MS survey scans. Variable dwell times on each CV level depending on DMS or DMS-MS survey scan information may also be applied to optimize the number of ions transferred downstream to a trapping device, for example, to the trapping ion mobility spectrometer to match the space charge capacity and eliminate suppression effects. Modes were singly charged ions are also selectively transferred through the DMS to the trapping device are also envisaged. The DMS survey scans may also include mass-to-charge ratio information generated by the TOF mass analyzer.

Additionally and/or alternatively, a single CV level is chosen for selectively transferring ions to the trapped ion mobility analyzer. In this mode of operation, the trapped ion mobility spectrometer is loaded with a fraction of ions only, corresponding to a single CV level that remains fixed through the LC gradient, and this allows to measure this fraction with a higher duty cycle covering a wider dynamic range in terms of ion concentration. Additionally, more concentrated samples can be loaded onto a chromatographic column and analyzed. Furthermore, the accumulation or injection time of ions can be chosen such that, according to the CV selected, a suitable number of ions is transferred according to the ion capacity of the pre-trapping region and/or of the analyzer region of the trapped ion mobility spectrometer. After the trapped ion mobility analyzer ions can be further subjected to mass selection, fragmentation and detection typically performed with LC-MS instrumentation enabling DDA and DIA analytical workflows. The CV level in a single CV experiment can be chosen such that for a typical bottom-up proteomics experiment a suitable population of peptides is selected by the DMS apparatus. The CV level can be optimized for various outcomes such as quantification of a maximum number of proteins or peptides and also for specific applications such as phosphoproteomics, immunopeptidomics or glycoproteomics.

The single CV level method can be extended further by analyzing the same sample multiple times using the same LC gradient, but with different CV values applied in each LC gradient to cover a CV range of interest. Optimum CV levels can therefore be identified where the number of peptide and protein identifications is the highest, while based on this information, a single new experiment can be designed and performed where the CV is cycled over a predetermined set of optimum CV levels produced using the single CV level approach. While cycling through different CV levels in a single experiment will increase the cycle time of the method, the depth of the analysis will also increase leading to an increased number of peptide and protein identifications. Experiments where the CV is cycled between 1 and 20 CV levels are envisioned, more preferably between 2 to 10 CV levels, and most preferably between 3 to 5 CV levels. The fraction of ions selected by the DMS apparatus can either be transferred in the trapped ion mobility analyzer providing another dimension of separation based on low field mobilities prior to mass selection, fragmentation and detection, or directly subjected to mass selection, fragmentation and detection typically performed with LC-MS instrumentation enabling DDA and DIA analytical workflows. The method can be optimized for various outcomes such as quantification of a maximal number of proteins or peptides and also for specific applications such as phosphoproteomics, immunopeptidomics or glycoproteomics. Optimum sets of CV levels values can be extended to samples belonging to a specific class of molecules, without the need to repeat all the single CV level experiments. The accumulation or injection times in the trapped ion mobility spectrometer can be fixed during the LC gradient or varied between the different CV levels to control the charge load since the ion flux at different CV levels may differ considerably.

In one exemplary embodiment, the first, the third and the fourth preferred methods are interleaved within a cycle or combined in a consecutive manner. A series of cycles can be applied sequentially during a LC gradient tailoring these methods in every cycle independently based on DMS survey scan information, DMS-MS survey scan information and/or trapped ion mobility - MS survey scan information.

In one exemplary embodiment, the second, the third and the fourth preferred methods are interleaved within a cycle or combined in a consecutive manner. A series of cycles can be applied sequentially during a LC gradient, tailoring these methods in every cycle independently based on DMS survey scan information, DMS-MS survey scan information and/or trapped ion mobility - MS survey scan information.

Preferably, the trapped ion mobility spectrometer comprises an analyzer part and a pre-trapping region for parallel accumulation. Preferably, the accumulation period in the pre-trapping region and the mobility analysis time are set equal to maximize the duty cycle of the trapped ion mobility spectrometer. Preferably, the modulated DMS scan time can be set equal to the trapped ion mobility scan time to improve the duty cycle of the method further. Most preferably, the number of sequential modulated DMS scans before a subsequent DMS survey scan is applied can be matched to the number of trapped ion mobility MS2 scans corresponding to a single trapped ion mobility - MS survey scan. This approach allows for scanning the entire two-dimensional map of mass-to-charge vs ion mobility corresponding to a single MS survey scan using all the different DIA methods with parallel accumulation and combining these with modulated DMS scans to load the trapped ion mobility device. Trapped ion mobility - MS survey scans are performed with the DMS operated in transmission mode. This mode of operation may require applying a symmetric RF waveform to the DMS electrodes and can be utilized further for quantifying precursor ions since the ion beam is no longer modulated. Symmetric and asymmetric RF waveform can be produced by controlling the duty cycle of the waveform. Most preferably, the waveforms applied in the low pressure DMS apparatus are rectangular waves with fast rising and falling edges and with flat tops.

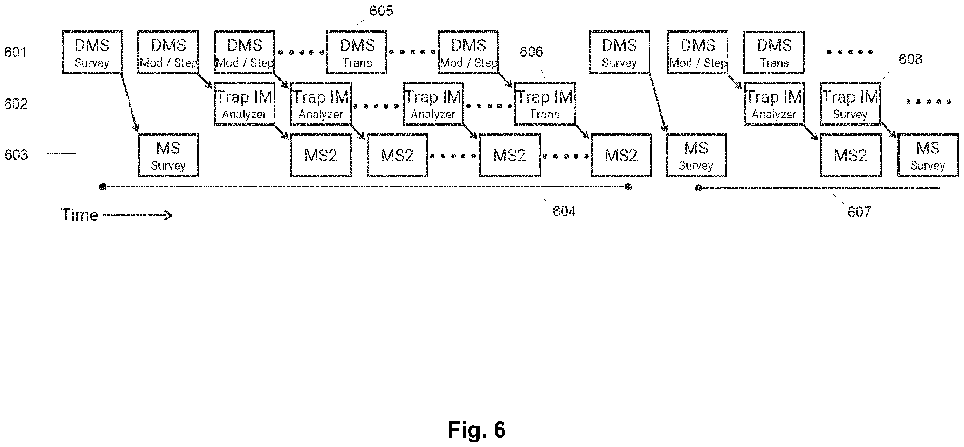

Figure 6 schematically depicts a method according to an exemplary embodiment. The method is of controlling a differential mobility spectrometer, DMS, the method implemented, at least in part by a computer comprising a processor and a memory. The method comprises: controlling the DMS in a set of modes, wherein the set of modes includes:
a first mode, wherein the DMS separates the ions, for example using an asymmetric waveform and/or a ramped compensation voltage; and
a second mode, wherein the DMS separates the ions and selectively attenuates respective fluxes of the separated ions according to respective abundances thereof, for example using an asymmetric waveform and/or a modulated compensation voltage.

In more detail, the DMS scans 601 are parallelized to trapped ion mobility scans 602 and to mass analyzer scans 603 of the mass spectrometer. A DMS survey scan is performed, either using an electrometer or the mass analyzer providing additional mass-to-charge ratio information. A series of modulated DMS scans are then applied and ions filtered in every individual modulated DMS scan are stored, separated by ion mobility and subjected to MS2 fragmentation. A full cycle 604 includes at least one DMS survey scan and two or more modulated or stepped DMS scans combined with trapped ion mobility separation, fragmentation of selected precursor ions or multiple precursor ions present in a wider mass-to-charge isolation window, followed by mass-to-charge ratio detection. The parallel accumulation region allows for selecting and transferring the next fraction of ions filtered by the DMS during separation and elution of the ions from the analyzer of the trapped ion mobility spectrometer, thus increasing the duty cycle of the experiment. A stepped CV approach can also be applied instead of modulating the CV and different CV levels can be applied within a cycle, for example cycles 604, 607. Additionally, the DMS can be operated in transmission-only mode 605 and ions are directly transferred to the trapped ion mobility spectrometer for low-field mobility separation followed by fragmentation and mass-to-charge ratio detection. The cycle may also include either modulated or stepped CV scans with the trapped ion mobility spectrometer operated in transmission mode 606. Similarly, ions can be subsequently subjected to the steps of precursor mass selection, fragmentation, and mass-to-charge ratio detection. A subsequent cycle 607 or all cycles during the LC gradient may also include trapped ion mobility - MS survey scans 608 where the DMS is operated in transmission mode.

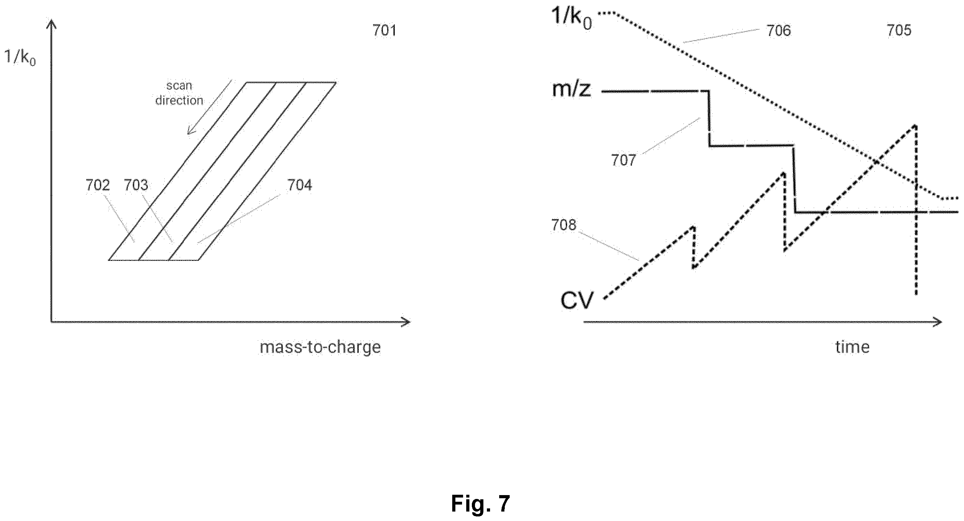

Figure 7 schematically depicts a method according to an exemplary embodiment. The method is of controlling a differential mobility spectrometer, DMS, the method implemented, at least in part by a computer comprising a processor and a memory. The method comprises: controlling the DMS in a set of modes, wherein the set of modes includes:
a first mode, wherein the DMS separates the ions, for example using an asymmetric waveform and/or a ramped compensation voltage; and
a fifth mode, wherein the DMS separates the ions and selectively filters the separated ions by selectively parking the respective compensation voltages of the separated ions, for example for respective durations.

In more detail, a correlation between differential ion mobility and the mass-to-charge ratio of the ions is established, thereby a correlation between the CV levels applied during a CV ramp and 1/k0 regions can be formulated since the correlation between mass-to-charge and the low-field ion mobility k0 is generally established. Figure 7 shows the two-dimensional map of ion mobility and mass-to-charge 701 and the three scan regions 702, 703 and 704 to analyze the ion population of interest where precursor ions are separated by ion mobility, progressively ejected from the trapped ion mobility spectrometer, and subjected to the steps of mass selection, fragmentation and detection. Based on the correlation principles outlined here, a stepped CV approach can be adopted whereby the selected CV levels applied to the DMS apparatus can be adjusted to deliver groups or fractions of ions to the trapped ion mobility spectrometer with mass-to-charge and low-field ion mobility properties within the boundaries defined by the scan regions. Specifically, a first DMS ramp can be designed with a first set of predetermined CV levels to deliver ions with mass-to-charge ratios and low-field ion mobility characteristics corresponding to the first region 702. The subsequent DMS ramp can be designed with a second set of predetermined CV levels to deliver ions with properties corresponding to region 703 and a third set of CV levels corresponding to region 704. This processing cycle can be repeated multiple times during the LC gradient, using intermediate trapped ion mobility - MS survey scans to define the high-density regions in the two-dimensional map 701, and tailor the CV levels applied to consecutive CV ramps accordingly, thus increasing the duty cycle of the instrument and increasing the depth of the analysis of complex protein and/or peptide samples. Preferably, as an example of a high duty cycle process, the second set of CV levels delivering ions to the pre-storage region of the trapped ion mobility spectrometer is applied while the first group or fraction of ions corresponding to the first set of CV levels is being separated and ejected from the analyzer region of the trapped ion mobility spectrometer, similarly to the parallel accumulation serial fragmentation approach.

According to a variation of the fifth preferred method of the present invention, the CV ramp can be varied in a synchronous manner with the trapped ion mobility scan, and preferably, the CV levels in each ramp will pass those ions to the ion mobility spectrometer, which will be released upon transfer, such that the ions are not stored during the entire scan of the trapped ion mobility spectrometer, thus increasing the duty cycle of the method by processing more ions faster while also reducing or eliminating undesired effects associated with trapping and storing an excessive amount space charge. Preferably, the consecutive CV ramps 708 are applied concurrently with the scanning functionality of the trapped ion mobility spectrometer 706, while the mass-to-charge windows applied to the quadrupole mass filter for selecting precursor ions for fragmentation are synchronously adjusted 707. This synchronous operation 705 of the low pressure DMS coupled to a trapped ion mobility spectrometer and a quadrupole mass spectrometer essential enhances the duty cycle of the analysis providing in-depth characterization of complex samples by mass spectrometry.

According to a sixth preferred method of the present invention, DMS survey scans are followed by one or multiple/sequential modulated DMS scans. Based on survey scan information, the modulated CV ramp is designed to provide downstream to a trapping device or to a trapped ion mobility spectrometer a constant flux of ions across all the CV values comprising a CV ramp. Generating a constant flux of ions during a DMS scan requires both attenuating and also augmenting the ion signal depending on ion abundance. Attenuating ions requires ramping and/or stepping the CV through the bright regions of the DMS survey scan faster. Augmenting the ion signal requires ramping and/or stepping the CV through the low-ion-signal regions of the DMS survey scan slower, thus allowing more time for low abundance ions to be transferred and accumulated in a downstream trapping device. The form of the non-linear CV ramp can therefore be matched to the spectral features of a DMS spectrum produced in a survey scan to level-off the ion signal across all CV values of a CV ramp applied in a DMS scan.

The product of the CV scan period and the ion signal (ion current) level defines the total number of charges transferred to a downstream trapping device. Most preferably, the total number of charges transferred downstream is equal or comparable to the space charge capacity of the trapping device. In this mode of operation designed to optimally accumulate ions in a downstream trapping device eliminates undesired mass discrimination effects and improves the overall performance, for example, by allowing a trapped ion mobility spectrometer to maintain high transmission, high ion mobility resolution and to avoid ion suppression effects and RF heating leading to uncontrolled fragmentation.

Although a preferred embodiment has been shown and described, it will be appreciated by those skilled in the art that various changes and modifications might be made without departing from the scope of the invention, as defined in the appended claims and as described above.

### Notes

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus comprising:
a series of mutually fluidically coupled vacuum chambers, including a first vacuum chamber and
a second vacuum chamber; and
a controller;
wherein the first vacuum chamber comprises: an ion inlet, for introduction of ions therethrough from an ion source; and a first ion guide, wherein the first ion guide is configured to guide the ions introduced through the ion inlet towards the second vacuum chamber, for example via a differential pressure aperture;
wherein the second vacuum chamber comprises: a differential mobility spectrometer, DMS; and wherein the controller is communicatively coupled to the DMS;
**characterized by**:
wherein the controller is configured to control the DMS in a set of modes, wherein the set of modes includes:
a first mode, wherein the DMS is configured to separate the ions, for example using an asymmetric waveform and/or a ramped compensation voltage; and
a second mode, wherein the DMS is configured to separate the ions and to selectively attenuate respective fluxes of the separated ions according to respective abundances thereof, for example using an asymmetric waveform and/or a modulated compensation voltage.

2. The apparatus according to any previous claim, wherein the controller is configured to control the DMS in the first mode to ramp, for example linearly, a compensation voltage, for example as a function of time and/or as a function of mobility.

3. The apparatus according to any previous claim, wherein the controller is configured to control the DMS in the second mode to selectively attenuate the respective fluxes of the separated ions proportionately according to the respective abundances of the separated ions.

4. The apparatus according to any previous claim, comprising a detector, configured to detect the respective fluxes of the separated ions.

5. The apparatus according to claim 4, wherein the controller is configured to control the DMS in the second mode to selectively attenuate the respective fluxes of the separated ions responsive to detected respective fluxes of the separated ions in the first mode.

6. The apparatus according to any previous claim, wherein the controller is configured to control the DMS in the second mode to selectively attenuate the respective fluxes of the separated ions by controlling, for example modulating, a compensation voltage of the DMS.

7. The apparatus according to claim 6, wherein the controller is configured to control the DMS in the second mode to selectively attenuate the respective fluxes of the separated ions by controlling respective compensation voltages, for example amplitudes and/or durations thereof, of the separated ions.

8. The apparatus according to claim 7, wherein the controller is configured to control the DMS in the second mode to selectively attenuate the respective fluxes of the separated ions by:
selectively modulating, for example amplitude modulating, the respective compensation voltages of the separated ions;
selectively ramping, for example at respective ramp rates, respective compensation voltages of the separated ions; and/or
selectively stepping, for example with respective steps and/or durations, the respective compensation voltages of the separated ions.

9. The apparatus according to any previous claim, wherein the controller is configured to control the DMS in the second mode to selectively attenuate the respective fluxes of the separated ions to at most a predetermined threshold flux.

10. The apparatus according to any previous claim, wherein the controller is configured to control the DMS in the second mode to selectively attenuate the respective fluxes of the separated ions to normalize, for example across the mobility range, the total flux, for example within a predetermined flux range.

11. The apparatus according to any previous claim, wherein the controller is configured to control the DMS in the second mode to transmit a predetermined total charge, for example within a predetermined total charge range.

12. The apparatus according to any previous claim, wherein the set of modes includes:
a third mode, wherein the DMS is configured to transmit the ions without separation, for example using a symmetric waveform and/or a DC bias.

13. The apparatus according to any previous claim, wherein the set of modes includes:
a fourth mode, wherein the DMS is configured to separate the ions and to selectively, for example preferentially, transmit the separated ions according to respective abundances thereof,
for example using an asymmetric waveform and/or a modulated compensation voltage.

14. The apparatus according to any previous claim, wherein the set of modes includes:
a fifth mode, wherein the DMS is configured to separate the ions and to selectively filter the separated ions by selectively parking the respective compensation voltages of the separated ions, for example for respective durations.

15. The apparatus according to any previous claim, wherein the controller is configured to switch between modes of the set of modes: within a scan, between successive scans, within a cycle and/or between successive cycles.
